# EUROPEAN PATENT APPLICATION

(11) **EP 4 611 470 A1**
(43) Date of publication of application: **03.09.2025**
(21) Application number: 23884909.5
(22) Date of filing: 31.10.2023
(51) Int. Cl.: H04W 74/08

(54) **METHOD AND APPARATUS FOR DETERMINING CONTENTION WINDOW VALUE**

(30) Priority: 04.11.2022 CN 202211379032; 17.02.2023 CN 202310154106
(71) Applicant: Huawei Technologies Co., Ltd., Shenzhen, Guangdong 518129 (CN)
(72) Inventor: LIU, Yun, Shenzhen, Guangdong 518129 (CN); LI, Chao, Shenzhen, Guangdong 518129 (CN); JIAO, Ruicheng, Shenzhen, Guangdong 518129 (CN)
(74) Representative: Pfenning, Meinig & Partner mbB
(86) International application number: PCT/CN2023/128257
(87) International publication number: WO 2024/093979

(57) **Abstract**

Embodiments of this application provide a contention window value determining method and an apparatus. According to this application, even if a cast type of a TB in a COT to which a reference duration belongs is different from a cast type of a to-be-transmitted TB, a TB in a COT to which a reference duration belongs corresponds to at least two cast types, or a to-be-transmitted TB corresponds to at least two cast types, a terminal device may determine the reference duration, where a priority of a COT to which the reference duration belongs is the same as a transmission priority corresponding to the to-be-transmitted TB, and determine a target contention window value based on a transmission status of at least one TB in the reference duration, thereby determining an appropriate target contention window value. When the terminal device preempts a channel for the to-be-transmitted TB based on the target contention window value, interference between different devices is avoided, and system transmission efficiency is improved.

## Description

This application claims priorities to Chinese Patent Application No. 202211379032.8, filed with the China National Intellectual Property Administration on November 4, 2022 and entitled "CONTENTION WINDOW VALUE DETERMINING METHOD AND APPARATUS", and to Chinese Patent Application No. 202310154106.6, filed with the China National Intellectual Property Administration on February 17, 2023 and entitled "CONTENTION WINDOW VALUE DETERMINING METHOD AND APPARATUS", both of which are incorporated herein by reference in their entireties.

### TECHNICAL FIELD

Embodiments of this application relate to the communication field, and more specifically, to a contention window value determining method and an apparatus.

### BACKGROUND

In a sidelink (sidelink, SL) system, a manner in which a terminal device preempts a channel is type 1 listen before talk (type 1 LBT).

In a type 1 transmission process, because each transmitting device is located in a distributed system, each transmitting device independently performs a type 1 LBT procedure. Therefore, the following case may occur: A plurality of devices with a same channel access priority class (channel access priority class, CAPC) use a same contention window value, and quantities (Ninit) of sensing slots randomly obtained by the plurality of devices based on the same contention window value are also the same. When Ninit randomly obtained by the plurality of devices is the same, the plurality of devices may simultaneously send data in a case of a type 1 LBT success (LBT success), causing a data conflict (to be specific, signals are mixed together). Consequently, a receiving end cannot demodulate a received signal, and data sending fails.

### SUMMARY

Embodiments of this application provide a contention window value determining method, to avoid a mutual collision between different devices and improve system transmission efficiency.

According to a first aspect, a contention window value determining method is provided. The method may be performed by a terminal device, or may be performed by a component (for example, a chip or a circuit) of the terminal device. This is not limited herein. For ease of description, the following uses an example in which the method is performed by the terminal device for description.

The method may include: The terminal device determines a reference duration, where a priority of a channel occupancy time (channel occupancy time, COT) to which the reference duration belongs is the same as a transmission priority corresponding to a to-be-transmitted TB; and the terminal device determines a target contention window value based on a transmission status of at least one TB in the reference duration, where the target contention window value is for preempting a channel for the to-be-transmitted TB, where a cast type of a TB in the COT to which the reference duration belongs is different from a cast type of the to-be-transmitted TB; a TB in the COT to which the reference duration belongs corresponds to at least two cast types; or the to-be-transmitted TB corresponds to at least two cast types.

Based on the foregoing technical solution, the terminal device may determine an appropriate contention window value based on the transmission status of the at least one TB in the reference duration, to avoid a mutual collision between different devices and improve system transmission efficiency. For example, if the at least one TB in the reference duration is successfully transmitted, the terminal device may determine a small contention window value, to reduce a listen before talk (listen before talk, LBT) duration and improve channel access efficiency. If the at least one TB in the reference duration fails to be transmitted, the terminal device may determine a large contention window value, to prolong an LBT duration, to reduce a possibility that the terminal device collides with another surrounding device.

In addition, even if the cast type of the TB in the COT to which the reference duration belongs is different from the cast type of the to-be-transmitted TB, the TB in the COT to which the reference duration belongs corresponds to at least two cast types, or the to-be-transmitted TB corresponds to at least two cast types, the terminal device may determine the reference duration based on the foregoing technical solution, and determine a contention window value based on the transmission status of the at least one TB in the reference duration.

With reference to the first aspect, in some implementations of the first aspect, a cast type of the at least one TB in the COT to which the reference duration belongs or in the reference duration is the same as a cast type of at least one TB in the to-be-transmitted TB.

Based on the foregoing technical solution, if the cast type of the at least one TB in the COT to which the reference duration belongs or in the reference duration is the same as a cast type of at least one TB in the to-be-transmitted TB, a target contention window value that is more suitable for preempting a channel for the to-be-transmitted TB can be determined.

With reference to the first aspect, in some implementations of the first aspect, the reference duration includes at least one transmitted TB; or the COT to which the reference duration belongs is a COT closest to a current moment.

The reference duration includes one transmitted TB, including the following several cases: The reference duration includes an initial transmission and all retransmissions of the TB; the reference duration includes a last retransmission of the TB; the reference duration includes an initial transmission of the TB, and feedback information of the initial transmission of the TB is an acknowledgment (acknowledgement, ACK); or the reference duration includes a retransmission of the TB, and feedback information of the retransmission of the TB is an ACK.

Based on the foregoing technical solution, if the reference duration includes the at least one transmitted TB, or the COT to which the reference duration belongs is the COT closest to the current moment, a target contention window value that is more suitable for preempting a channel for the to-be-transmitted TB can be determined.

With reference to the first aspect, in some implementations of the first aspect, a start moment of the reference duration is any one of the following: a start moment of the COT to which the reference duration belongs; a transmission start moment of a transmitted TB in the COT to which the reference duration belongs; a transmission start moment of a TB corresponding to a lowest transmission priority in the TB in the COT to which the reference duration belongs; a transmission start moment of a first TB in the COT to which the reference duration belongs, where a cast type of the first TB is the same as the cast type of the at least one TB in the to-be-transmitted TB; or a transmission start moment of a TB that is in a TB corresponding to feedback information received by the terminal device and that is first transmitted in the COT to which the reference duration belongs.

With reference to the first aspect, in some implementations of the first aspect, an end moment of the reference duration is any one of the following: an end moment of the COT to which the reference duration belongs; a transmission end moment of a transmitted TB in the COT to which the reference duration belongs; a transmission end moment of a TB corresponding to a lowest transmission priority in the TB in the COT to which the reference duration belongs; a transmission end moment of a first TB in the COT to which the reference duration belongs, where a cast type of the first TB is the same as the cast type of the at least one TB in the to-be-transmitted TB; or a transmission end moment of a TB that is in a TB corresponding to feedback information received by the terminal device and that is last transmitted in the COT to which the reference duration belongs.

With reference to the first aspect, in some implementations of the first aspect, before that a terminal device determines a reference duration, the method further includes: The terminal device determines that a cast type of a TB in a transmitted COT after a last updated contention window value is different from the cast type of the to-be-transmitted TB, or that the TB in the transmitted COT corresponds to at least two cast types; the terminal device determines that the to-be-transmitted TB corresponds to at least two cast types; or the terminal device determines that after the last updated contention window value, there is no transmitted TB whose cast type is the same as that of the to-be-transmitted TB.

With reference to the first aspect, in some implementations of the first aspect, that the terminal device determines a target contention window value based on a transmission status of at least one TB in the reference duration includes: The terminal device determines the target contention window value based on a transmission status of a second TB in the reference duration, where the second TB meets one or more of the following conditions: both an initial transmission and a retransmission of the second TB are completed, and feedback information of a last retransmission of the second TB is a negative acknowledgment (negative acknowledgement, NACK); feedback information of an initial transmission or a retransmission of the second TB is an ACK; according to a predefined cast type order, a cast type of the second TB is ranked before a cast type of a remaining TB in the reference duration; a cast type of the second TB is the same as the cast type of the at least one TB in the to-be-transmitted TB; the second TB is a TB that is in the TB corresponding to the feedback information received by the terminal device and that is last transmitted in the reference duration; a transmission priority corresponding to the second TB is the same as the transmission priority corresponding to the to-be-transmitted TB; a contention window value determined based on the transmission status of the second TB is greater than a contention window value determined based on a transmission status of a remaining TB in the reference duration; a contention window value determined based on the transmission status of the second TB is less than a contention window value determined based on a transmission status of a remaining TB in the reference duration; a transmission priority corresponding to the second TB is higher than a transmission priority corresponding to a remaining TB in the reference duration; or the second TB is a TB, in the TB in the reference duration, for which the terminal device receives feedback information corresponding to the TB.

The foregoing technical solution provides a plurality of flexible methods for determining a target contention window value, so that the methods can be applied to a plurality of different scenarios.

The predefined cast type order is as follows: An order of different cast types from front to back is: multicast 2, multicast 1, unicast, and hybrid automatic repeat request (hybrid automatic repeat request, HARQ) disabled; an order of different cast types from front to back is: multicast 2, unicast, multicast 1, and HARQ disabled; or an order of different cast types from front to back is: unicast, multicast 2, multicast 1, and HARQ disabled.

With reference to the first aspect, in some implementations of the first aspect, if the TB in the reference duration includes M second TBs, where M is an integer greater than 1, that the terminal device determines the target contention window value based on a transmission status of a second TB in the reference duration includes: The terminal device determines N candidate contention window values based on transmission statuses of the M second TBs, where N is a positive integer, and N≤M; and the terminal device determines the target contention window value based on the N candidate contention window values, where the target contention window value is a smallest value in the N candidate contention window values; the target contention window value is a largest value in the N candidate contention window values; the target contention window value is a candidate contention window value that is in the N candidate contention window values and greater than an average value of the plurality of candidate contention window values and that has a smallest difference from the average value; or the target contention window value is a candidate contention window value in the N candidate contention window values, where an absolute value of a difference between the candidate contention window value and an average value of the N candidate contention window values is the smallest.

A plurality of second TBs correspond to one cast type, or a plurality of second TBs correspond to at least two cast types. This is not limited in this application.

Based on the foregoing technical solution, even if the terminal device determines the plurality of second TBs, the terminal device may determine the target contention window value based on transmission statuses of the plurality of second TBs.

With reference to the first aspect, in some implementations of the first aspect, if the TB in the reference duration includes M second TBs, where M is a positive integer greater than 1, that the terminal device determines the target contention window value based on a transmission status of a second TB in the reference duration includes: The terminal device collects statistics about feedback information of the M second TBs; and the terminal device determines the target contention window value based on the feedback information of the M second TBs.

The terminal device collects statistics about the feedback information of the M second TBs in the following manner: if a cast type of a TB is unicast, collecting statistics about feedback information of an initial transmission and feedback information of each retransmission of the TB, collecting statistics about ACK feedback information of the TB, or collecting statistics about feedback information of a last retransmission of the TB; if a cast type of a TB is multicast 1 and feedback information of the TB is a NACK, denoting a quantity of pieces of feedback information of the TB as 1; if a cast type of a TB is multicast 1 and feedback information of the TB is not a NACK, denoting the feedback information of the TB as an ACK, and denoting a quantity of pieces of feedback information of the TB as 1, denoting a quantity of pieces of feedback information of the TB as L, or denoting a quantity of pieces of feedback information of the TB as L-1, where L is a quantity of terminal devices included in a terminal device group configured to receive the TB; or if a cast type of a TB is multicast 2, collecting statistics about each piece of feedback information of the TB.

Based on the foregoing technical solution, even if the terminal device determines the plurality of second TBs, the terminal device may determine the target contention window value based on transmission statuses of the plurality of second TBs.

With reference to the first aspect, in some implementations of the first aspect, if the TB in the reference duration includes M second TBs, where M is a positive integer greater than 1, that the terminal device determines the target contention window value based on a transmission status of a second TB in the reference duration includes: The terminal device determines the target contention window value based on a transmission status of one of the M second TBs; or the terminal device sequentially updates a contention window value based on transmission statuses of the M second TBs according to a transmission sequence of the M second TBs or a sequence of receiving feedback information of the M second TBs, until the target contention window value is determined.

Based on the foregoing technical solution, even if the terminal device determines the plurality of second TBs, the terminal device may determine the target contention window value based on transmission statuses of the plurality of second TBs.

With reference to the first aspect, in some implementations of the first aspect, that the terminal device determines a target contention window value based on a transmission status of at least one TB in the reference duration includes: The terminal device determines at least one candidate contention window value based on the transmission status of the at least one TB; and the terminal device determines the target contention window value based on the at least one candidate contention window value, where the target contention window value is a smallest value in the at least one candidate contention window value; the target contention window value is a largest value in the at least one candidate contention window value; the target contention window value is a candidate contention window value that is in the at least one candidate contention window value and greater than an average value of the at least one candidate contention window value and that has a smallest difference from the average value; or the target contention window value is a candidate contention window value in the at least one candidate contention window value, where an absolute value of a difference between the candidate contention window value and an average value of the at least one candidate contention window value is the smallest.

Based on the foregoing technical solution, the terminal device may determine the target contention window value based on a transmission status of one or more TBs in the reference duration.

With reference to the first aspect, in some implementations of the first aspect, that the terminal device determines a target contention window value based on a transmission status of at least one TB in the reference duration includes: The terminal device collects statistics about feedback information of the at least one TB; and the terminal device determines the target contention window value based on the feedback information of the at least one TB.

The terminal device may collect statistics about the feedback information of the at least one TB in the following manner: if a cast type of a TB is unicast, collecting statistics about feedback information of an initial transmission and feedback information of each retransmission of the TB, collecting statistics about ACK feedback information of the TB, or collecting statistics about feedback information of a last retransmission of the TB; if a cast type of a TB is multicast 1 and feedback information of the TB is a NACK, denoting a quantity of pieces of feedback information of the TB as 1; if a cast type of a TB is multicast 1 and feedback information of the TB is not a NACK, denoting the feedback information of the TB as an ACK, and denoting a quantity of pieces of feedback information of the TB as 1, denoting a quantity of pieces of feedback information of the TB as L, or denoting a quantity of pieces of feedback information of the TB as L-1, where L is a quantity of terminal devices included in a terminal device group configured to receive the TB; or if a cast type of a TB is multicast 2, collecting statistics about each piece of feedback information of the TB.

Based on the foregoing technical solution, the terminal device may collect statistics about feedback information of one or more TBs in the reference duration, so that an appropriate target contention window value can be determined based on the feedback information of the one or more TBs.

With reference to the first aspect, in some implementations of the first aspect, if the reference duration includes the at least one transmitted TB, and the at least one transmitted TB is a TB that is latest transmitted after a last updated contention window value, that the terminal device determines a target contention window value based on a transmission status of at least one TB in the reference duration includes: The terminal device determines the target contention window value based on a transmission status of the latest transmitted TB.

Based on the foregoing technical solution, a channel status corresponding to the latest transmitted TB is close to a current channel status. Therefore, an appropriate target contention window value can be determined based on the transmission status of the latest transmitted TB.

For example, if a cast type of the latest transmitted TB is hybrid automatic repeat request HARQ enabled, the terminal device determines the target contention window value based on feedback information of the latest transmitted TB; or if a cast type of the latest transmitted TB is HARQ disabled, the terminal device determines the target contention window value based on a quantity of blind transmissions or a blind transmission proportion of the latest transmitted TB.

With reference to the first aspect, in some implementations of the first aspect, if the COT to which the reference duration belongs is the COT closest to the current moment, that the terminal device determines a target contention window value based on a transmission status of at least one TB in the reference duration includes: The terminal device determines the target contention window value based on a transmission status of a latest transmitted TB in the reference duration.

Based on the foregoing technical solution, a channel status corresponding to the latest transmitted TB is close to a current channel status. Therefore, an appropriate target contention window value can be determined based on the transmission status of the latest transmitted TB.

For example, that the terminal device determines the target contention window value based on a transmission status of a latest transmitted TB in the reference duration includes: If the terminal device does not receive feedback information of the latest transmitted TB, the terminal device determines that the target contention window value remains unchanged; or if the terminal device receives feedback information of the latest transmitted TB, the terminal device determines the target contention window value based on the feedback information of the latest transmitted TB.

According to a second aspect, a contention window value determining method is provided. The method may be performed by a terminal device, or may be performed by a component (for example, a chip or a circuit) of the terminal device. This is not limited herein. For ease of description, the following uses an example in which the method is performed by the terminal device for description.

The method may include: The terminal device determines a reference duration corresponding to each of at least one cast type, where the at least one cast type is a cast type of at least one TB in a to-be-transmitted TB, a priority of a channel occupancy time COT to which the reference duration belongs is the same as a transmission priority corresponding to the to-be-transmitted TB, and a cast type of a TB in the reference duration is the same as a cast type corresponding to the reference duration; and the terminal device determines a target contention window value based on a transmission status of a TB in the reference duration corresponding to each cast type, where the target contention window value is for preempting a channel for the to-be-transmitted TB, and a TB transmitted in the COT to which the reference duration belongs corresponds to at least two cast types; or the to-be-transmitted TB corresponds to at least two cast types.

Based on the foregoing technical solution, even if a TB in the COT to which the reference duration belongs corresponds to at least two cast types, or the to-be-transmitted TB corresponds to at least two cast types, the terminal device may determine the reference duration corresponding to each of the at least one cast type, and determine a contention window value based on the transmission status of the TB in the reference duration. This helps determine an appropriate contention window value, to avoid a mutual collision between different devices and improve system transmission efficiency.

With reference to the second aspect, in some implementations of the second aspect, the at least one TB is a TB that corresponds to a lowest transmission priority in the to-be-transmitted TB.

With reference to the second aspect, in some implementations of the second aspect, the at least one cast type includes a plurality of cast types. That the terminal device determines a target contention window value based on a transmission status of a TB in the reference duration corresponding to each cast type includes: The terminal device determines at least one candidate contention window value based on the transmission status of the TB in the reference duration corresponding to each of the at least one cast type; and the terminal device determines the target contention window value based on the at least one candidate contention window value, where the target contention window value is a smallest value in the at least one candidate contention window value; the target contention window value is a largest value in the at least one candidate contention window value; the target contention window value is a candidate contention window value that is in the at least one candidate contention window value and greater than an average value of the at least one candidate contention window value and that has a smallest difference from the average value; or the target contention window value is a candidate contention window value in the at least one candidate contention window value, where an absolute value of a difference between the candidate contention window value and an average value of the at least one candidate contention window value is the smallest.

Based on the foregoing technical solution, even if the terminal device determines a plurality of reference durations, the terminal device may determine the target contention window value based on transmission statuses of TBs in the plurality of reference durations.

According to a third aspect, a contention window value determining method is provided. The method may be performed by a terminal device, or may be performed by a component (for example, a chip or a circuit) of the terminal device. This is not limited herein. For ease of description, the following uses an example in which the method is performed by the terminal device for description.

The terminal device determines a target contention window value based on a transmission status of at least one physical sidelink shared channel (physical sidelink shared channel, PSSCH) in a reference duration, where the target contention window value is for preempting a channel for a to-be-transmitted PSSCH; and the reference duration is within a COT, the reference duration includes a first PSSCH, the first PSSCH is a HARQ enabled PSSCH, and a HARQ corresponding to the first PSSCH is detected by the terminal device; and the terminal device is a terminal device that initializes the COT.

Based on the foregoing technical solution, the reference duration determined by the terminal device includes the first PSSCH, and the terminal device detects the HARQ corresponding to the first PSSCH. Therefore, when the terminal device determines the target contention window value based on the transmission status of the at least one PSSCH in the reference duration, the terminal device may determine the target contention window value based on at least the HARQ of the first PSSCH, thereby avoiding the following problem: The terminal device does not have sufficient information to determine how to determine the target contention window value because the terminal device does not detect a HARQ corresponding to a PSSCH in the reference duration. In addition, the following problem can also be avoided: Because the terminal device mistakenly considers a PSFCH transmission-transmission conflict/transmission-reception conflict as a PSSCH collision when the terminal device does not detect a HARQ, a contention window value is blindly increased, further reducing a probability of accessing a channel by the terminal device.

With reference to the third aspect, in some implementations of the third aspect, the HARQ enabled PSSCH includes one or more of the following PSSCHs: a HARQ enabled unicast PSSCH, a HARQ enabled multicast 1 PSSCH, or a HARQ enabled multicast 2 PSSCH.

The HARQ enabled (enabled) PSSCH may also be referred to as a HARQ-ACK enabled PSSCH.

With reference to the third aspect, in some implementations of the third aspect, the HARQ enabled PSSCH includes one or more of the following PSSCHs: a HARQ enabled unicast PSSCH, or a HARQ enabled multicast 2 PSSCH.

The HARQ enabled PSSCH may also be referred to as an ACK/NACK HARQ-ACK enabled PSSCH.

With reference to the third aspect, in some implementations of the third aspect, a start moment of the reference duration is a start moment of the COT.

With reference to the third aspect, in some implementations of the third aspect, an end moment of the reference duration is an end moment of a time unit in which the first PSSCH is located, and the first PSSCH is the 1^{st} HARQ enabled PSSCH whose corresponding HARQ is detected by the terminal device in the COT.

According to a fourth aspect, a contention window value determining method is provided. The method may be performed by a terminal device, or may be performed by a component (for example, a chip or a circuit) of the terminal device. This is not limited herein. For ease of description, the following uses an example in which the method is performed by the terminal device for description.

The terminal device determines a target contention window value based on a transmission status of at least one PSSCH in the reference duration, where the target contention window value is for preempting a channel for a to-be-transmitted PSSCH, where the reference duration is within a COT, the reference duration includes at least one HARQ enabled PSSCH; and when the terminal device does not detect HARQs corresponding to all HARQ enabled PSSCHs in the reference duration, the terminal device remains a contention window value unchanged, or the terminal device determines the target contention window value based on a proportion of a retransmitted PSSCH in the to-be-transmitted PSSCH.

That the terminal device remains the contention window value unchanged may include the following two cases: The terminal device remains the contention window value unchanged based on a contention window value of a COT that is initialized by the terminal device and that is closest to a current to-be-transmitted PSSCH; or the terminal device remains the contention window value unchanged based on a contention window value of the COT to which the reference duration belongs. In other words, when the terminal device remains the contention window value unchanged, the terminal device may determine, as the target contention window value, the contention window value of the COT that is initialized by the terminal device and that is closest to the current to-be-transmitted PSSCH, or the terminal device may determine, as the target contention window value, the contention window value of the COT to which the reference duration belongs. That the terminal device remains the contention window value unchanged may be understood as that the terminal device does not adjust the contention window value, or the terminal device does not perform an action of adjusting the contention window value.

Based on the foregoing technical solution, if the terminal device does not detect the HARQs corresponding to all the HARQ enabled PSSCHs in the reference duration, the terminal device no longer blindly increases the contention window value, but remains the contention window value unchanged, or determines the target contention window value based on a proportion of a retransmitted PSSCH in the to-be-transmitted PSSCH. This can avoid a problem that because the terminal device blindly increases the contention window value, a probability that the terminal device accesses a channel is decreased.

With reference to the fourth aspect, in some implementations of the fourth aspect, the HARQ enabled PSSCH includes one or more of the following PSSCHs: a HARQ enabled unicast PSSCH, a HARQ enabled multicast 1 PSSCH, or a HARQ enabled multicast 2 PSSCH.

The HARQ enabled PSSCH may also be referred to as a HARQ-ACK enabled PSSCH.

With reference to the fourth aspect, in some implementations of the fourth aspect, the HARQ enabled PSSCH includes one or more of the following PSSCHs: a HARQ enabled unicast PSSCH, or a HARQ enabled multicast 2 PSSCH.

The HARQ enabled PSSCH may also be referred to as an ACK/NACK HARQ-ACK enabled PSSCH.

According to a fifth aspect, a communication apparatus is provided. The apparatus is configured to perform the method according to any one of the possible implementations of the first aspect to the fourth aspect. Specifically, the apparatus may include units and/or modules configured to perform the method according to any one of the first aspect or the possible implementations of the first aspect, may include units and/or modules configured to perform the method according to any one of the second aspect or the possible implementations of the second aspect, such as a processing unit and/or a communication unit, may include units and/or modules, such as a processing unit and/or a communication unit, configured to perform the method according to any one of the third aspect or the possible implementations of the third aspect, or may include units and/or modules, such as a processing unit and/or a communication unit, configured to perform the method according to any one of the fourth aspect or the possible implementations of the fourth aspect.

In an implementation, the apparatus is a terminal device. When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, processing circuit, logic circuit, or the like.

According to a sixth aspect, a communication apparatus is provided. The apparatus includes at least one processor, configured to execute a computer program or instructions stored in a memory, to perform the method according to any one of the first aspect or the possible implementations of the first aspect, perform the method according to any one of the second aspect or the possible implementations of the second aspect, perform the method according to any one of the third aspect or the possible implementations of the third aspect, or perform the method according to any one of the fourth aspect or the possible implementations of the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in a terminal device.

According to a seventh aspect, this application provides a processor, configured to perform the method provided in the first aspect, configured to perform the method provided in the second aspect, configured to perform the method provided in the third aspect, or configured to perform the method provided in the fourth aspect.

Unless otherwise specified, or if the operations such as sending and obtaining/receiving related to the processor do not conflict with actual functions or internal logic of the processor in related descriptions, the operations may be understood as operations such as output, receiving, and input of the processor, or may be understood as sending and receiving operations performed by a radio frequency circuit and an antenna. This is not limited in this application.

According to an eighth aspect, a computer-readable storage medium is provided. The computer-readable medium stores program code executed by a device. The program code is used to perform the method according to any one of the first aspect or the possible implementations of the first aspect, perform the method according to any one of the second aspect or the possible implementations of the second aspect, perform the method according to any one of the third aspect or the possible implementations of the third aspect, or perform the method according to any one of the fourth aspect or the possible implementations of the fourth aspect.

According to a ninth aspect, a computer program product including instructions is provided. When the computer program product runs on a computer, the computer is enabled to perform the method according to any one of the first aspect or the possible implementations of the first aspect, the computer is enabled to perform the method according to any one of the second aspect or the possible implementations of the second aspect, the computer is enabled to perform the method according to any one of the third aspect or the possible implementations of the third aspect, or the computer is enabled to perform the method according to any one of the fourth aspect or the possible implementations of the fourth aspect.

According to a tenth aspect, a communication system is provided, and includes at least one terminal device described above. The terminal device is configured to perform the method according to any one of the first aspect or the possible implementations of the first aspect, perform the method according to any one of the second aspect or the possible implementations of the second aspect, perform the method according to any one of the third aspect or the possible implementations of the third aspect, or perform the method according to any one of the fourth aspect or the possible implementations of the fourth aspect.

### BRIEF DESCRIPTION OF DRAWINGS

FIG. 1 is a diagram of a communication system to which a method according to an embodiment of this application is applicable;
FIG. 2 is a schematic flowchart of a method according to an embodiment of this application;
FIG. 3 is a diagram of a relationship between a cast type corresponding to a TB in a COT to which a reference duration belongs and a cast type corresponding to a to-be-transmitted TB;
FIG. 4 is a diagram of a manner of determining a reference duration according to an embodiment of this application;
FIG. 5 is a diagram of a method according to an embodiment of this application;
FIG. 6 is a diagram of a method according to an embodiment of this application;
FIG. 7 is a diagram of a method according to an embodiment of this application;
FIG. 8 is a schematic flowchart of a method according to an embodiment of this application;
FIG. 9 is a diagram of a method according to an embodiment of this application;
FIG. 10 is a diagram of a communication mechanism according to this application;
FIG. 11 is a schematic flowchart of a method according to an embodiment of this application;
FIG. 12 is a diagram of a manner of determining a reference duration according to an embodiment of this application;
FIG. 13 is a schematic flowchart of a method according to an embodiment of this application;
FIG. 14 is a diagram of a communication apparatus according to an embodiment of this application;
FIG. 15 is a block diagram of a communication apparatus according to another embodiment of this application; and
FIG. 16 is a diagram of a chip system according to an embodiment of this application.

### DESCRIPTION OF EMBODIMENTS

The following describes technical solutions in embodiments of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to future communication systems such as a 6th generation mobile communication system. The technical solutions provided in this application may be further applied to sidelink (sidelink, SL) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. As an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a roadside unit (road side unit, RSU) or a network device.

A terminal device in embodiments of this application includes various devices having a wireless communication function, and the terminal device may be configured to be connected to a person, an object, a machine, and the like. The terminal device may be widely used in various scenarios, for example, cellular communication, SL, V2X, peer to peer (peer to peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, uncrewed aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device, may be an apparatus (for example, a communication module, a modem, or a chip in the foregoing device) built in the foregoing device, or may be another processing device connected to the wireless modem.

It should be understood that in some scenarios, the terminal device may be further configured to serve as a base station. For example, the terminal device may serve as a scheduling entity, and provide a sidelink signal between terminal devices in a scenario such as V2X, SL, or P2P.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip, or may include a chip and another discrete component.

The terminal device may be deployed on land, including indoor or outdoor and handheld or vehicle-mounted devices, may be deployed on a water surface, or may be deployed on an airplane, a balloon, and a satellite in the air. A scenario in which the terminal device is located is not limited in embodiments of this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

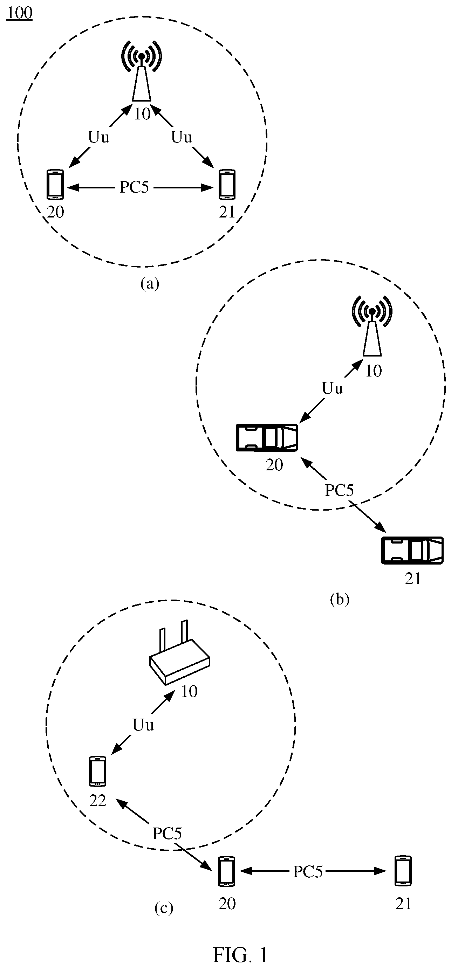

FIG. 1 is a diagram of a communication system 100 to which an embodiment of this application is applicable.

A communication system 100 shown in (a) in FIG. 1 includes a network device 10, a terminal device 20, and a terminal device 21. Both the terminal device 20 and the terminal device 21 are within a coverage area of the network device 10. The network device 10 communicates with the terminal devices through a Uu air interface, and the terminal device 20 communicates with the terminal device 21 through a PC5 interface. A communication system 100 shown in (b) in FIG. 1 includes a network device 10, a terminal device 20, and a terminal device 21. The terminal device 20 is within a coverage area of the network device 10, and the terminal device 21 is outside the coverage area of the network device 10. A communication system 100 shown in (c) in FIG. 1 includes a network device 10, a terminal device 20, a terminal device 21, and a terminal device 22. Neither the terminal device 20 nor the terminal device 21 is within a coverage area of the network device 10, and the terminal device 22 is within the coverage area of the network device 10.

In scenarios shown in (a) and (b) in FIG. 1, the terminal device 20 may communicate with the terminal device 21 by using a resource scheduled by the network device, and the resource may be referred to as a licensed resource or a licensed frequency band; or the terminal device 20 may select a resource by itself, to be specific, selects a resource from a resource pool, to communicate with the terminal device 21, and the resource may be referred to as an unlicensed resource or an unlicensed frequency band. In a scenario shown in (c) in FIG. 1, because both the terminal device 20 and the terminal device 21 are in an area without network coverage, the terminal device 20 and the terminal device 21 may communicate in a self-resource selection manner.

It should be understood that a quantity of terminal devices and a quantity of network devices shown in FIG. 1 are merely examples, and a quantity of terminal devices and a quantity of network devices in a communication system are not limited in this application.

To understand this application more clearly, the following describes concepts used in unlicensed spectrum communication.

### 1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. The following mainly describes the unlicensed spectrum.

In the unlicensed spectrum, a sending device may use a spectrum resource through contention. In a possible manner, the sending device contends for a channel through listen before talk (listen before talk, LBT), to use a channel resource.

### 2. Resource pool

NR SL communication is performed based on a resource pool (resource pool). The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). If different resource pools have a same resource pool index, it may be considered that time-frequency resources in the different resource pools completely overlap.

In an SL-unlicensed (SL-unlicensed, SL-U) communication scenario, because a frequency band is shared by UEs in a plurality of forms, for example, a UE using an SL technology (referred to as an SL UE), a UE using a Wi-Fi technology, and a UE using a Bluetooth technology perform transmission on a same frequency band. Therefore, an SL resource pool may also be understood as a set of resources that can be used for SL transmission.

### 3. Resource

A resource is a time-frequency resource in a resource pool. A time domain resource may be represented by a symbol (symbol), a slot (slot), a mini-slot (mini-slot), a partial slot (partial slot), a subframe (subframe), a radio frame (frame), a sensing slot (sensing slot), or the like.

A frequency domain resource may be represented by a resource element (resource element, RE), a resource block (resource block, RB), a subchannel (subchannel), a bandwidth (bandwidth), a bandwidth part (bandwidth part, BWP), a carrier (carrier), a channel (channel), an interlace (interlace), or the like.

### 4. LBT

An LBT mechanism is a channel access rule based on random back-off (random back-off). To be specific, before accessing a channel and starting to send data, a terminal needs to sense whether the channel is idle (idle). If the terminal senses that the channel is idle for a specific period of time, the terminal may occupy the channel. If the terminal senses that the channel is not idle, the terminal needs to wait and can occupy the channel only after the channel is restored to idle again. The LBT mechanism is a mandatory feature for using an unlicensed spectrum because there are regulation (regulation) requirements for using the unlicensed frequency band in various regions around the world. Terminals in various forms operating in different communication protocols can use the unlicensed spectrum only when regulations are met, to fairly and efficiently use spectrum resources.

For an unlicensed spectrum within a frequency range (frequency 1, FR1), before transmission, a UE needs to perform LBT on each 20 MHz channel, and the 20 MHz channel may be referred to as an LBT channel. To avoid interference between different channels, the UE cannot send data on an entire 20 MHz bandwidth, but reserves a part of frequency band resources as a guard band (guard band), and sends the data only on a remaining part of frequency domain resources. This part of available resources is referred to as a resource block set (RB set). When the UE performs an LBT operation on a plurality of consecutive 20 MHz channels and successfully accesses the channels, a guard band between two RB sets may be for transmitting data, thereby improving resource utilization.

To comply with regulations, the 3GPP organization classifies an LBT mechanism in an NR system into the following four types:
Category 1 LBT (category 1 LBT): After obtaining a channel occupancy time (channel occupancy time, COT), a communication device immediately sends data after a short switching gap (switching gap) from a reception status, and category 1 LBT is referred to as Cat 1 LBT for short. The COT refers to a period of time in which the communication device is allowed to occupy a channel after successfully accessing the channel, where the switching gap cannot be greater than 16 µs.
Category 2 LBT (category 2 LBT) is LBT without random back-off, and is referred to as Cat 2 LBT for short. To be specific, after sensing that a channel is in an idle state and lasts for a fixed period of time, a communication device can send data without performing random back-off.
Category 3 LBT (category 3 LBT) is random back-off LBT with a fixed contention window (contention window, CW) value, and is referred to as Cat 3 LBT for short. To be specific, a communication device generates a random number N based on a fixed contention window value, and may send data after sensing that a channel is in an idle state and lasts for a period of time determined based on the random number N. The contention window value is related to a minimum value and a maximum value of N. The contention window value indicates a size of a contention window.
Category 4 LBT (category 4 LBT) is random back-off LBT with a variable contention window value, and is referred to as Cat 4 LBT for short. To be specific, a communication device generates a random number N based on a variable contention window value, and may send data after sensing that a channel is in an idle state and lasts for a period of time determined based on the random number N. The contention window value is related to a minimum value and a maximum value of N, and the communication device may change the contention window value.

An SL-U device complies with the 3GPP protocol, and uses the LBT mechanism as a channel access method. Specifically, the SL-U device uses the following types of LBT.

Type 1 LBT (type 1 LBT): Cat 4 LBT described above. The SL-U device can access a channel and send data only after performing random back-off. Specifically, a network device or a terminal device may initiate transmission after the network device or the terminal device senses, for the first time, that a channel is idle in a sensing slot duration (sensing slot duration) of defer sensing (defer sensing) (the time is denoted as T_{d}) and after a counter N in the following step 4 is zero. Specifically, according to the following steps, the counter N is adjusted by sensing the channel to obtain an additional sensing slot duration.

Step 1: Set N=Nᵢₙᵢₜ, and then perform step 4. Nᵢₙᵢₜ is a random number whose value ranges from 0 to *CWₚ,* and *CWₚ* is a contention window (contention window) value.

Step 2: If N>0, the network device or the terminal device chooses to decrease a counter value, for example, sets N=N-1; and then performs step 3.

Step 3: Sense the channel to obtain an additional sensing slot duration, and if the channel is idle in the additional sensing slot duration, perform step 4; otherwise, perform step 5.

Step 4: If N=0, stop and transmit data; otherwise, perform step 2.

Step 5: Listen to the channel, until it is sensed, in another T_{d}, that the channel is busy or it is sensed that the channel is detected to be idle in all sensing slots in another T_{d}; and then perform step 6.

Step 6: If the channel is detected to be idle in all sensing slots in another T_{d}, perform step 4; otherwise, perform step 5.

T_{d} includes T_{f}=16 µs and subsequent mₚ consecutive sensing slot durations (denoted as Tₛ₁). For a value of mₚ, refer to Table 1. *CW_{min,p}* is a minimum contention window value, *CW_{max,p}* is a maximum contention window value, and *CW_{min,p}*≤*CWₚ*≤*CW_{max,p}. T_{mcot,p}* is a maximum length of the COT. To be specific, the COT transmitted by the network device or the terminal device on the channel does not exceed *T_{mcot,p}.*

**Table 1**

| Channel access priority class (p) | mₚ | *CW_{min,p}* | *CW_{max,p}* | *T_{mcot,p}* | Value range of *CWₚ* |
|---|---|---|---|---|---|
| 1 | 1 | 3 | 7 | 2 ms | {3, 7} |
| 2 | 1 | 7 | 15 | 4 ms | {7, 15} |
| 3 | 3 | 15 | 1023 | 6 ms or 10 ms | {15, 31, 63,127, 255, 511, 1023} |
| 4 | 7 | 15 | 1023 | 6 ms or 10 ms | {15, 31, 63,127, 255, 511, 1023} |

Type 2A LBT (type 2A LBT): Cat 2 LBT with a gap of 25 us. After sensing that a channel is idle for 25 us, the SL-U device may access the channel and send data.

Type 2B LBT (type 2B LBT): Cat 2 LBT with a gap of 16 µs. After sensing that a channel is idle for 16 µs, the SL-U device may access the channel and send data.

Type 2C LBT (type 2C LBT): Cat 1 LBT with a maximum gap of 16 µs. The SL-U device does not need to sense a channel, and may directly access the channel and send data after the maximum switching gap of 16 µs in the COT.

### 5. Channel occupancy (channel occupancy, CO) and channel occupancy time (channel occupancy time, COT)

A channel is a group of consecutive resource blocks (RB) on which a channel access process is performed on an unlicensed spectrum. It may be understood as that the channel is a bandwidth used by a UE to perform channel access.

Channel occupancy refers to transmission performed by the UE on one or more channels after the UE performs a channel access process.

After performing type 1 channel access, the UE occupies a channel in a continuous period of time to transmit information, and this continuous period of time is referred to as the channel occupancy time. A frequency domain unit of the COT is a channel, and a time domain unit of the COT is ms or a slot. In embodiments of this application, the COT may be a time concept, to be specific, time of SL transmission, or may be a resource concept, to be specific, a time domain resource occupied for SL transmission.

A period of time for the UE to transmit information cannot exceed a maximum channel occupancy time (maximum channel occupancy time, MCOT), which is denoted as *T_{cot,p}.* For different channel access priority classes (channel access priority classes, CAPCs), values of *T_{cot,p}* are different, as shown in Table 1. For a case in which one UE accesses a channel and transmits information in a COT, transmission time does not exceed the maximum channel occupancy time *T_{cot,p}.* For a case in which a plurality of UEs transmit information in a COT, transmission time of a UE initializing the COT and a UE sharing the COT does not exceed the maximum channel occupancy time *T_{cot,p},* where *p* is a CAPC of the UE initializing the COT, or *p* is a smallest CAPC in CAPC values of UEs that perform transmission in the COT.

### 6. Physical sidelink feedback channel (physical sidelink feedback channel, PSFCH) resource

A PSFCH resource represents a resource for transmitting information carried on a PSFCH. For example, one PSFCH resource occupies two consecutive orthogonal frequency division multiplexing (orthogonal frequency division multiplexing, OFDM) symbols in time domain and one physical resource block (physical resource block, PRB) in frequency domain.

In a possible case, the PSFCH resource may be for transmitting feedback information. For example, for one physical sidelink shared channel (physical sidelink shared channel, PSSCH) transmission, if a transmitting end uses control information to carry hybrid automatic repeat request-acknowledgment (hybrid automatic repeat request acknowledgment, HARQ-ACK) feedback enabling information, a receiving end may feed back acknowledgment (acknowledgement, ACK) or negative acknowledgment (negative acknowledgement, NACK) information based on a decoding result of data information carried on a PSSCH. The ACK or NACK information is transmitted through the PSFCH. The PSSCH transmission refers to transmission performed through the PSSCH.

### 7. Service scenario supporting PSFCH feedback

V2X is used as an example. V2X supports three scenarios: unicast, multicast, and broadcast. HARQ feedback is supported for unicast and multicast. There are two multicast scenarios: multicast 1 and multicast 2.

In the unicast scenario, one sending terminal and one receiving terminal form one unicast connection pair. After correctly receiving control information from the sending terminal, the receiving terminal sends, based on HARQ enabling indication information of the control information, a PSFCH sequence corresponding to ACK information to the sending terminal if data information received through a PSSCH is correctly decoded. Otherwise, the receiving terminal feeds back a PSFCH sequence corresponding to NACK information. The receiving terminal receives the control information from the sending terminal through a PSCCH. The receiving terminal sends the PSFCH sequence to the sending terminal through a PSFCH.

In the multicast 1 (negative acknowledgement-only (negative acknowledgement-only, NACK-only)) scenario, after correctly receiving control information from a sending terminal, an intra-group terminal feeds back, based on HARQ enabling indication information of the control information, a PSFCH sequence corresponding to NACK information if the intra-group terminal fails to decode received data information. Otherwise, the intra-group terminal does not feed back any information.

In the multicast 2 (NACK/ACK) scenario, after correctly receiving control information from a sending terminal, an intra-group terminal feeds back, based on HARQ enabling indication information of the control information, a PSFCH sequence corresponding to ACK information if the intra-group terminal correctly decodes received data information. Otherwise, the intra-group terminal feeds back a PSFCH sequence corresponding to NACK information.

In a type 1 transmission process, because each transmitting-end UE is located in a distributed system, each transmitting-end UE independently performs a type 1 LBT procedure. Therefore, the following case may occur: A plurality of UEs with a same CAPC use a same contention window value, and Nᵢₙᵢₜ randomly obtained by the plurality of UEs based on the same contention window value is also the same. When Nᵢₙᵢₜ randomly obtained by the plurality of UEs is the same, the plurality of UEs may simultaneously send data in a case of an LBT success, causing a data conflict (to be specific, signals are mixed together). Consequently, a receiving end cannot demodulate a received signal, and data sending fails.

In view of this, embodiments of this application provide a contention window value determining method, so that an appropriate contention window value can be determined based on a transmission status of a transport block (transport block, TB), to avoid a mutual collision between different UEs and improve system transmission efficiency.

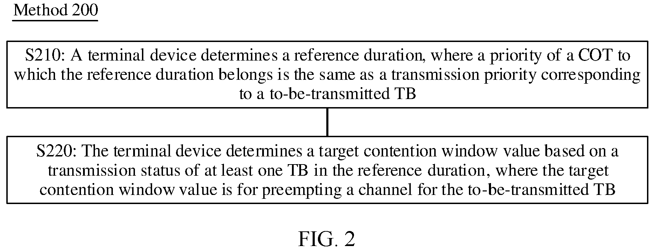

FIG. 2 is a schematic flowchart of a contention window value determining method 200 according to an embodiment of this application. The method 200 may include the following steps.

S210: A terminal device determines a reference duration, where a priority of a COT to which the reference duration belongs is the same as a transmission priority corresponding to a to-be-transmitted TB.

The COT to which the reference duration (reference duration) belongs is a COT that includes the reference duration. When a time length of the reference duration is less than or equal to one COT, the reference duration includes a part or all of the COT to which the reference duration belongs. For ease of description, the COT to which the reference duration (reference duration) belongs is denoted as a first COT below.

The priority of the first COT is a priority of a transmission with a lowest priority in one or more transmissions (transmissions) corresponding to a TB in the first COT. The transmission priority refers to a channel access priority class (channel access priority class, CAPC). The TB in the first COT is a TB transmitted in the first COT, and the TB transmitted in the first COT may include one or more TBs. For example, if the TB in the first COT includes a TB corresponding to a transmission whose CAPC is 1, a TB corresponding to a transmission whose CAPC is 2, and a TB corresponding to a transmission whose CAPC is 3, a value of the priority of the first COT is 3, or a CAPC of the first COT is 3.

The transmission priority corresponding to the to-be-transmitted TB is a priority of a transmission with a lowest priority in one or more transmissions corresponding to the to-be-transmitted TB. For example, if the to-be-transmitted TB includes a TB corresponding to a transmission whose CAPC is 2 and a TB corresponding to a transmission whose CAPC is 3, a value of the priority of the to-be-transmitted TB is 3, or a CAPC of the to-be-transmitted TB is 3. The to-be-transmitted TB may include one or more TBs.

For example, a cast type of the TB in the first COT is different from a cast type of the to-be-transmitted TB; the TB in the first COT corresponds to at least two cast types; or the to-be-transmitted TB corresponds to at least two cast types.

The cast type of the TB may include the following four types: multicast 1, multicast 2, unicast, and hybrid automatic repeat request (hybrid automatic repeat request, HARQ) disabled (HARQ disabled).

If the cast type of the TB is multicast 1, a transmitting device sends the TB to a terminal device group in a multicast manner. Correspondingly, when a receiving device in the terminal device group fails to decode the received TB, the receiving device feeds back a PSFCH sequence corresponding to NACK information to the transmitting device; otherwise, the receiving device feeds back no information or feeds back other information different from the NACK information.

If the cast type of the TB is multicast 2, a transmitting device sends the TB to a terminal device group in a multicast manner. Correspondingly, when successfully decoding the received TB, a receiving device in the terminal device group feeds back, to the transmitting device, a PSFCH sequence corresponding to ACK information; otherwise, the receiving device feeds back a PSFCH sequence corresponding to NACK information.

If the cast type of the TB is unicast, a transmitting device sends the TB in a unicast manner. Correspondingly, when successfully decoding the received TB, a receiving device feeds back, to the transmitting device, a PSFCH sequence that carries ACK information; otherwise, the receiving device feeds back a PSFCH sequence that carries NACK information.

If the cast type of the TB is HARQ disabled, a transmitting device sends the TB in a unicast manner or in a multicast or broadcast manner. Correspondingly, regardless of whether a receiving device successfully decodes the received TB, the receiving device does not feed back any information.

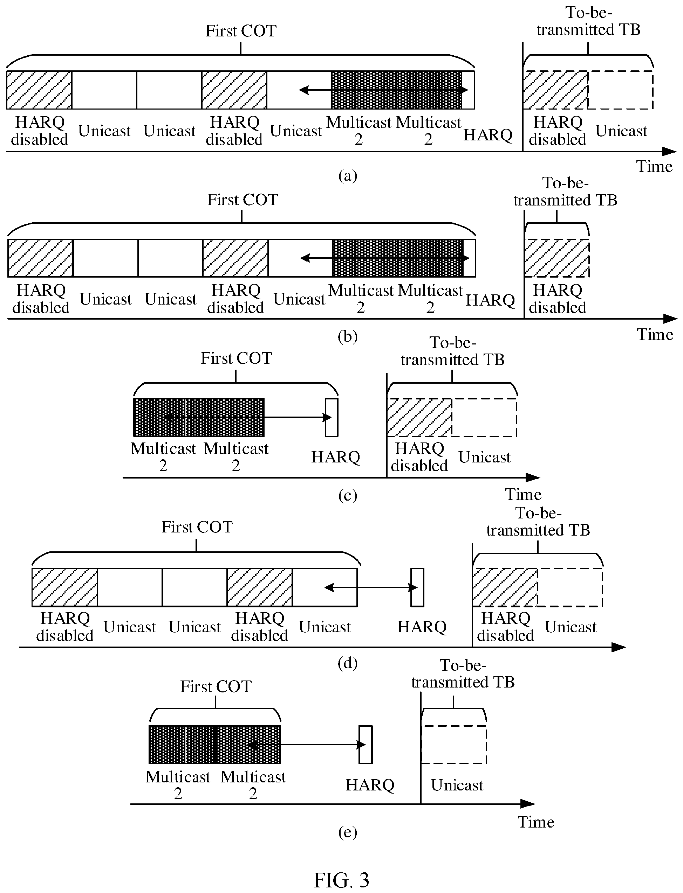

FIG. 3 is a diagram of a relationship between the cast type of the TB in the first COT and the cast type of the to-be-transmitted TB according to an embodiment of this application.

The TB in the first COT may correspond to at least any two cast types. In this case, the to-be-transmitted TB may correspond to any cast type, or the to-be-transmitted TB may correspond to at least any two cast types. As shown in (a) in FIG. 3 and (b) in FIG. 3, the TB in the first COT includes a TB whose cast type is HARQ disabled, a TB whose cast type is unicast, and a TB whose cast type is multicast 2. In other words, the TB in the first COT corresponds to three cast types. As shown in (a) in FIG. 3, the to-be-transmitted TB includes a TB whose cast type is HARQ disabled and a TB whose cast type is unicast. In other words, the to-be-transmitted TB corresponds to two cast types. Further, as shown in (b) in FIG. 3, the to-be-transmitted TB includes a TB whose cast type is HARQ disabled. In other words, the to-be-transmitted TB corresponds to one cast type.

The to-be-transmitted TB may correspond to any two cast types. In this case, the TB in the first COT may correspond to any one cast type, or the TB in the first COT may correspond to at least any two cast types. As shown in (c) in FIG. 3 and (d) in FIG. 3, the to-be-transmitted TB includes a TB whose cast type is HARQ disabled and a TB whose cast type is unicast. As shown in (c) in FIG. 3, the TB in the first COT includes a TB whose cast type is multicast 2. In other words, the TB in the first COT corresponds to one cast type. Further, as shown in (d) in FIG. 3, the TB in the first COT includes a TB whose cast type is HARQ disabled and a TB whose cast type is unicast. In other words, the TB in the first COT corresponds to two cast types.

Both the to-be-transmitted TB and the TB in the first COT include only one cast type. This embodiment of this application is applicable to a case in which the cast type included in the to-be-transmitted TB is different from the cast type included in the TB in the first COT. As shown in (e) in FIG. 3, the TB in the first COT includes a TB whose cast type is multicast 2, and the to-be-transmitted TB includes a TB whose cast type is unicast. In other words, the cast type of the TB in the first COT is different from the cast type of the to-be-transmitted TB.

The following describes the reference duration determined by the terminal device.

For example, the reference duration includes at least one transmitted TB.

The reference duration includes one transmitted TB, including the following several cases: The reference duration includes an initial transmission and all retransmissions of the TB; the reference duration includes a last retransmission of the TB; the reference duration includes an initial transmission of the TB, and feedback information of the initial transmission of the TB is an ACK; or the reference duration includes a retransmission of the TB, and feedback information of the retransmission of the TB is an ACK.

That the reference duration includes an initial transmission and all retransmissions of the TB means that the initial transmission and all retransmissions of the TB are performed in the reference duration. That the reference duration includes a last retransmission of the TB means that the last retransmission of the TB is performed in the reference duration, and time points of an initial transmission and other retransmissions of the TB are not limited. When the reference duration includes the last retransmission of the TB, the reference duration may include the other retransmissions and the initial transmission of the TB, or may not include the other retransmissions or the initial transmission of the TB. That the reference duration includes an initial transmission of the TB means that the initial transmission of the TB is performed in the reference duration. That the reference duration includes a retransmission of the TB means that the retransmission of the TB is performed in the reference duration.

Optionally, after a last updated contention window value, if the terminal device may determine a plurality of candidate reference durations including the at least one transmitted TB, the reference duration finally determined by the terminal device may be a candidate reference duration that is in the plurality of candidate reference durations and closest to a current moment, where a priority of a COT to which the candidate reference duration belongs is the same as the transmission priority corresponding to the to-be-transmitted TB.

As described above, if the reference duration includes a part or all of the COT to which the reference duration belongs, when the reference duration includes the at least one transmitted TB, the COT to which the reference duration belongs also includes the at least one transmitted TB.

It may be further understood that, if the reference duration is closest to the current moment and includes the at least one transmitted TB, and the priority of the COT to which the reference duration belongs is the same as the transmission priority corresponding to the to-be-transmitted TB, the COT to which the reference duration belongs is a COT that is in a transmitted COT after the last updated contention window value and whose priority is the same as the transmission priority corresponding to the to-be-transmitted TB, where the COT includes the at least one transmitted TB and is closest to the current moment.

Optionally, after the last updated contention window value, if there is no transmitted TB, the reference duration determined by the terminal device may be a part or all of COTs that are closest to a current moment and whose priorities are the same as the transmission priority corresponding to the to-be-transmitted TB. In other words, if there is no transmitted TB after the last updated contention window value, the COT to which the reference duration belongs is a COT that is in a transmitted COT and closest to the current moment, where a priority of the COT is the same as the transmission priority corresponding to the to-be-transmitted TB. Further, the reference duration determined by the terminal device is a part or all of the COT to which the reference duration belongs.

For example, a cast type of at least one TB in the reference duration is the same as a cast type of at least one TB in the to-be-transmitted TB.

For example, if the to-be-transmitted TB includes a TB whose cast type is unicast and a TB whose cast type is HARQ disabled, the reference duration determined by the terminal device may include a TB whose cast type is unicast and/or a TB whose cast type is HARQ disabled.

Optionally, after the last updated contention window value, if the terminal device may determine a plurality of candidate reference durations, and a cast type of at least one TB in each of the plurality of candidate reference durations is the same as a cast type of at least one TB in the to-be-transmitted TB, the reference duration finally determined by the terminal device may be a candidate reference duration that is in the plurality of candidate reference durations and closest to a current moment, where a priority of a COT to which the candidate reference duration belongs is the same as the transmission priority corresponding to the to-be-transmitted TB.

As described above, if the reference duration includes a part or all of the COT to which the reference duration belongs, when the cast type of the at least one TB in the reference duration is the same as the cast type of the at least one TB in the to-be-transmitted TB, a cast type of at least one TB in the COT to which the reference duration belongs is the same as the cast type of the at least one TB in the to-be-transmitted TB.

It may be further understood that, if the reference duration is closest to the current moment, the cast type of the at least one TB in the reference duration is the same as the cast type of the at least one TB in the to-be-transmitted TB, and the priority of the COT to which the reference duration belongs is the same as the transmission priority corresponding to the to-be-transmitted TB, the COT to which the reference duration belongs is a COT that is in a transmitted COT after the last updated contention window value and whose priority is the same as the transmission priority corresponding to the to-be-transmitted TB, where the COT is closest to the current moment, and a cast type of at least one TB in the COT is the same as the cast type of the at least one TB in the to-be-transmitted TB.

Optionally, the terminal device may first determine the COT to which the reference duration belongs, and then determine the reference duration based on the COT to which the reference duration belongs. For ease of description, the COT to which the reference duration belongs is denoted as the first COT below. The following describes a manner in which the terminal device determines the first COT.

For example, the first COT is a COT whose priority is the same as the transmission priority corresponding to the to-be-transmitted TB. In other words, the terminal device may determine, as the first COT, a COT that is in a transmitted COT after the last updated contention window value and whose priority is the same as the transmission priority corresponding to the to-be-transmitted TB. In this way, the terminal device may determine the reference duration based on the first COT.

Optionally, the transmitted COT after the last updated contention window value includes a plurality of COTs whose priorities are the same as the transmission priority corresponding to the to-be-transmitted TB. In this case, the first COT is a COT that is in the plurality of COTs and that is closest to a current moment. In other words, the terminal device may determine, as the first COT, a COT that is in the transmitted COT after the last updated contention window value and closest to a current moment and whose priority is the same as the transmission priority corresponding to the to-be-transmitted TB. In this way, the terminal device may determine the reference duration based on the first COT.

Optionally, the first COT includes at least one first TB, and a cast type of the first TB is the same as a cast type of at least one TB in the to-be-transmitted TB. In other words, a TB whose cast type in the first COT is the same as the cast type of the at least one TB in the to-be-transmitted TB may be referred to as the first TB. In other words, the terminal device may determine, as the first COT, a COT that is in the transmitted COT after the last updated contention window value and includes the at least one first TB and whose priority is the same as the transmission priority corresponding to the to-be-transmitted TB.

For example, the to-be-transmitted TB includes a TB whose cast type is unicast and a TB whose cast type is HARQ disabled. The transmitted COT after the last updated contention window value includes two COTs whose priorities are the same as the transmission priority corresponding to the to-be-transmitted TB, namely, COT #1 and COT #2. COT #1 includes a TB whose cast type is multicast 2, and COT #2 includes a TB whose cast type is multicast #2 and a TB whose cast type is unicast. Because both COT #2 and the to-be-transmitted TB include the TB whose cast type is unicast, the terminal device determines COT #2 as the first COT.

Optionally, the transmitted COT after the last updated contention window value includes a plurality of COTs whose priorities are the same as the transmission priority corresponding to the to-be-transmitted TB and that include the at least one first TB. In this case, the first COT is a COT that is in the plurality of COTs and that is closest to a current moment. In other words, the terminal device may determine, as the first COT, a COT that is in the transmitted COT after the last updated contention window value and whose priority is the same as the transmission priority corresponding to the to-be-transmitted TB, where the COT includes the at least one first TB and is closest to the current moment. In this way, the terminal device may determine the reference duration based on the first COT.

Optionally, the transmitted COT after the last updated contention window value does not include the at least one first TB. In this case, the first COT is a COT that is in the transmitted COT and closest to a current moment and whose priority is the same as the transmission priority corresponding to the to-be-transmitted TB.

Optionally, the first COT includes at least one transmitted TB. In other words, the terminal device may determine, as the first COT, a COT that is in the transmitted COT after the last updated contention window value and includes the at least one transmitted TB and whose priority is the same as the transmission priority corresponding to the to-be-transmitted TB.

The COT includes one transmitted TB, including the following several cases: The COT includes an initial transmission and all retransmissions of the TB; the COT includes a last retransmission of the TB; the COT includes an initial transmission of the TB, and feedback information of the initial transmission of the TB is an ACK; or the COT includes a retransmission of the TB, and feedback information of the retransmission of the TB is an ACK.

Optionally, the transmitted COT after the last updated contention window value includes a plurality of COTs whose priorities are the same as the transmission priority corresponding to the to-be-transmitted TB and that include the at least one transmitted TB. In this case, the first COT is a COT that is in the plurality of COTs and that is closest to a current moment. In other words, the terminal device may determine, as the first COT, a COT that is in the transmitted COT after the last updated contention window value and whose priority is the same as the transmission priority corresponding to the to-be-transmitted TB, where the COT includes the at least one transmitted TB and is closest to the current moment. In this way, the terminal device may determine the reference duration based on the first COT.

Optionally, the transmitted COT after the last updated contention window value does not include the at least one transmitted TB. In this case, the first COT is a COT that is in the transmitted COT and closest to a current moment and whose priority is the same as the transmission priority corresponding to the to-be-transmitted TB.

Optionally, a priority of the first COT is the same as the transmission priority corresponding to the to-be-transmitted TB, and the first COT includes at least one first TB, and includes at least one transmitted TB.

Optionally, the transmitted COT after the last updated contention window value includes a COT whose priority is the same as the transmission priority corresponding to the to-be-transmitted TB and that includes at least one first TB and includes the at least one transmitted TB. In this case, the first COT is a COT that is in the plurality of COTs and that is closest to a current moment.

The following describes a start moment and an end moment of the reference duration. For ease of description, the COT to which the reference duration belongs is denoted as the first COT below.

Optionally, the start moment of the reference duration is any one of the following: a start moment of the first COT; a transmission start moment of a transmitted TB in the first COT; a transmission start moment of a TB corresponding to a lowest transmission priority in a TB in the first COT; a transmission start moment of a first TB in the first COT, where a cast type of the first TB is the same as the cast type of the at least one TB in the to-be-transmitted TB; or a transmission start moment of a TB that is in a TB corresponding to feedback information received by the terminal device and that is first transmitted in the first COT.

Optionally, if the start moment of the reference duration is the transmission start moment of the transmitted TB in the first COT, and the first COT includes a plurality of transmitted TBs, the start moment of the reference duration may be a transmission start moment of any one of the plurality of transmitted TBs, a transmission start moment of a TB corresponding to a lowest transmission priority in the plurality of transmitted TBs, a transmission start moment of a TB that is in the plurality of transmitted TBs and whose cast type is the same as the cast type of the at least one to-be-transmitted TB, or a transmission start moment of a TB that is first transmitted in the plurality of transmitted TBs.

Optionally, if the start moment of the reference duration is the transmission start moment of the first TB, and the first COT includes a plurality of first TBs, the start moment of the reference duration may be a transmission start moment of any one of the plurality of first TBs, a transmission start moment of a first TB corresponding to a lowest transmission priority in the plurality of first TBs, or a transmission start moment of a TB that is first transmitted in the plurality of first TBs.

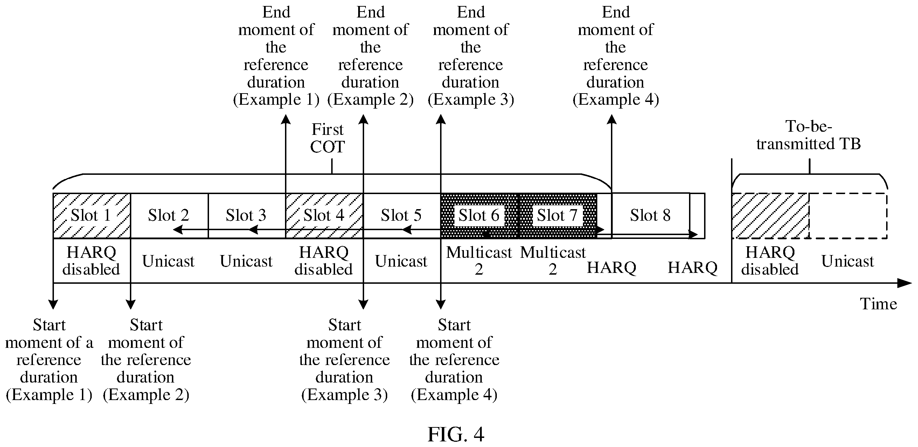

FIG. 4 is a diagram of determining the start moment of the reference duration in the first COT. As shown in FIG. 4, the first COT includes slot 1 to slot 7. Slot 1 is for transmitting a first blind transmission of TB #1, slot 4 is for transmitting a second blind transmission of TB #1, a CAPC of a transmission corresponding to TB #1 is 2, and a cast type of TB #1 is HARQ disabled. Slot 2 is for transmitting an initial transmission of TB #2, slot 3 is for transmitting a first retransmission of TB #2, a CAPC of a transmission corresponding to TB #2 is 3, and a cast type of TB #2 is unicast. Slot 5 is for transmitting an initial transmission of TB #3, a CAPC of a transmission corresponding to TB #3 is 2, and a cast type of TB #3 is unicast. Slot 6 is for transmitting an initial transmission of TB #4, slot 7 is for transmitting a first retransmission of TB #4, a CAPC of a transmission corresponding to TB #4 is 2, and a cast type of TB #4 is multicast 2. The terminal device receives, in slot 7, feedback information of the initial transmission of TB #2, feedback information of the first retransmission of TB #2, and feedback information of the initial transmission of TB #3. Assuming that the feedback information of the first retransmission of TB #2 is an ACK, TB #2 is a transmitted TB included in the first COT. Assuming that TB #4 includes only one retransmission, TB #4 is also a transmitted TB included in the first COT.

If the start moment of the reference duration is the start moment of the first COT, the start moment of the reference duration is a start moment of slot 1.

If the start moment of the reference duration is the transmission start moment of the transmitted TB in the first COT, the start moment of the reference duration may be a transmission start moment of TB #2, namely, a start moment of slot 2, or a transmission start moment of TB #4, namely, a start moment of slot 6. For example, because the cast type of TB #2 is the same as the cast type of the at least one to-be-transmitted TB, the start moment of slot 2 may be determined as the start moment of the reference duration.

If the start moment of the reference duration is the transmission start moment of the TB corresponding to the lowest transmission priority in the TB in the first COT, the start moment of the reference duration is a transmission start moment of TB #2, namely, the start moment of the reference duration is a start moment of slot 2.

If the start moment of the reference duration is the transmission start moment of the first TB, the start moment of the reference duration may be a transmission start moment of TB #1, namely, a start moment of slot 1, a transmission start moment of TB #2, namely, a start moment of slot 2, or a transmission start moment of TB #3, namely, a start moment of slot 5. For example, if the transmission start moment of the first TB with the lowest transmission priority is selected as the start moment of the reference duration, the start moment of the reference duration is the start moment of slot 2.

If the start moment of the reference duration is the transmission start moment of the TB that is in the TB corresponding to feedback information received by the terminal device and that is first transmitted in the first COT, the start moment of the reference duration is a transmission start moment of TB #2, namely, a start moment of slot 2.

It should be noted that FIG. 4 is described by using an example in which the terminal device receives the feedback information in the first COT. The terminal device may receive, in the first COT, feedback information of the TB that is in the first COT, or the terminal device may receive, after the first COT, feedback information of the TB that is in the first COT. This is not limited in this embodiment of this application. For example, the terminal device may receive feedback information of an initial transmission of TB #4 and feedback information of a first retransmission of TB #4 in slot 8 after the first COT.

Optionally, an end moment of the reference duration is any one of the following: an end moment of the first COT; a transmission end moment of the transmitted TB in the first COT; a transmission end moment of the TB corresponding to the lowest transmission priority in the TB in the first COT; a transmission end moment of the first TB in the first COT, where the cast type of the first TB is the same as the cast type of the at least one TB in the to-be-transmitted TB; a transmission end moment of a TB that is in the TB corresponding to the feedback information received by the terminal device and that is last transmitted in the first COT; or an end moment of the 1^{st} transmission slot of the TB that is in the TB corresponding to the feedback information received by the terminal device and that is first transmitted in the first COT.

Optionally, if the end moment of the reference duration is the transmission end moment of the transmitted TB in the first COT, and the first COT includes a plurality of transmitted TBs, the end moment of the reference duration may be a transmission end moment of any one of the plurality of transmitted TBs, a transmission end moment of a TB corresponding to a lowest transmission priority in the plurality of transmitted TBs, a transmission end moment of a TB that is in the plurality of transmitted TBs and whose cast type is the same as the cast type of the at least one to-be-transmitted TB, or a transmission end moment of a TB that is last transmitted in the plurality of transmitted TBs.

Optionally, if the end moment of the reference duration is the transmission end moment of the first TB, and the first COT includes a plurality of first TBs, the end moment of the reference duration may be a transmission end moment of any one of the plurality of first TBs, a transmission end moment of a first TB corresponding to a lowest transmission priority in the plurality of first TBs, or a transmission end moment of a TB that is last transmitted in the plurality of first TBs.

Optionally, if the end moment of the reference duration is the transmission end moment of the TB corresponding to the lowest transmission priority in the TB in the first COT, and the reference duration includes a plurality of TBs corresponding to the lowest transmission priority, the end moment of the reference duration may be a transmission end moment of any one of the plurality of TBs corresponding to the lowest transmission priority, or a transmission end moment of a TB that is first transmitted in the plurality of TBs corresponding to the lowest transmission priority.

As shown in FIG. 4, if the end moment of the reference duration is the end moment of the first COT, the end moment of the reference duration is an end moment of slot 7.

If the end moment of the reference duration is the transmission end moment of the transmitted TB in the first COT, the end moment of the reference duration may be a transmission end moment of TB #2, namely, an end moment of slot 3, or a transmission end moment of TB #4, namely, an end moment of slot 7. For example, because the cast type of TB #2 is the same as the cast type of the at least one to-be-transmitted TB, the end moment of slot 3 may be determined as the end moment of the reference duration.

If the end moment of the reference duration is the transmission end moment of the TB corresponding to the lowest transmission priority in the TB in the first COT, the end moment of the reference duration is a transmission end moment of TB #2, namely, an end moment of slot 3.

If the end moment of the reference duration is the transmission end moment of the first TB, the end moment of the reference duration may be a transmission end moment of TB #1, namely, an end moment of slot 4, a transmission end moment of TB #2, namely, an end moment of slot 3, or a transmission end moment of TB #3, namely, an end moment of slot 5. For example, if the transmission end moment of the first TB with the lowest transmission priority is selected as the end moment of the reference duration, the end moment of the reference duration is the end moment of slot 3.

If the end moment of the reference duration is the transmission end moment of the TB that is in the TB corresponding to the feedback information received by the terminal device and that is last transmitted in the first COT, the end moment of the reference duration is a transmission end moment of TB #3, namely, an end moment of slot 5.

If the end moment of the reference duration is the end moment of the 1^{st} transmission slot of the TB that is in the TB corresponding to the feedback information received by the terminal device and that is first transmitted in the first COT, the end moment of the reference duration is an end moment of the 1^{st} transmission slot of TB #2, namely, an end moment of slot 2.

It should be noted that, in FIG. 4, an example in which feedback information of an initial transmission of TB #2 is a NACK is used for description. If the feedback information of the initial transmission of TB #2 is an ACK, a transmission end moment of TB #2 is the end moment of slot 2.

As described above, the reference duration may include a part or all of the first COT. If the reference duration includes the entire first COT, the start moment of the reference duration is the start moment of the first COT, and the end moment of the reference duration is the end moment of the first COT. If the reference duration includes a part of the first COT, the start moment of the reference duration is later than the start moment of the first COT, and/or the end moment of the reference duration is earlier than the end moment of the first COT.

Optionally, a cast type of at least one TB in the reference duration is the same as the cast type of the at least one TB in the to-be-transmitted TB. In other words, when the first COT includes at least one first TB, if the cast type of the at least one TB in the reference duration needs to be the same as the cast type of the at least one TB in the to-be-transmitted TB, the start moment of the reference duration determined by the terminal device is not later than the transmission start moment of the first TB, and the end moment of the determined reference duration is not earlier than the transmission end moment of the first TB, where the cast type of the first TB is the same as that of the at least one TB in the to-be-transmitted TB. As shown in FIG. 4, if the reference duration needs to include TB #1, the start moment of the reference duration determined by the terminal device is the transmission start moment of TB #1 (namely, the start moment of slot 1), and the end moment of the determined reference duration is not earlier than the transmission end moment of TB #1 (namely, the end moment of slot 4). Alternatively, if the reference duration needs to include TB #2, the start moment of the reference duration determined by the terminal device is not later than the transmission start moment of TB #2 (namely, the start moment of slot 2), and the end moment of the determined reference duration is not earlier than the end moment of slot 2 or slot 3. If feedback information of an initial transmission of TB #2 in slot 2 is an ACK, the end moment of the reference duration determined by the terminal device is not earlier than the end moment of slot 2. If the feedback information of the initial transmission of TB #2 in slot 2 is a NACK, the end moment of the reference duration determined by the terminal device is not earlier than the end moment of slot 3.

Optionally, the reference duration includes at least one transmitted TB. In other words, when the first COT includes the at least one transmitted TB, if the reference duration needs to include the at least one transmitted TB, the start moment of the reference duration determined by the terminal device is not later than the transmission start moment of the transmitted TB in the first COT, and the end moment of the determined reference duration is not earlier than the transmission end moment of the transmitted TB in the first COT. As shown in FIG. 4, if the reference duration needs to include TB #2, the start moment of the reference duration determined by the terminal device is not later than the start moment of slot 2, and the end moment of the determined reference duration is not earlier than the end moment of slot 2 or slot 3. If the feedback information of the initial transmission of TB #2 in slot 2 is an ACK, the end moment of the reference duration determined by the terminal device is not earlier than the end moment of slot 2. If the feedback information of the initial transmission of TB #2 in slot 2 is a NACK, the end moment of the reference duration determined by the terminal device is not earlier than the end moment of slot 3.

The reference duration includes one transmitted TB, including the following several cases: The reference duration includes an initial transmission and all retransmissions of the TB; the reference duration includes a last retransmission of the TB; the reference duration includes an initial transmission of the TB, and feedback information of the initial transmission of the TB is an ACK; or the reference duration includes a retransmission of the TB, and feedback information of the retransmission of the TB is an ACK.

Optionally, before S210, the method 200 further includes: The terminal device determines that a cast type of a TB in a transmitted COT after a last updated contention window value is different from the cast type of the to-be-transmitted TB, or that the TB in the transmitted COT corresponds to at least two cast types.

In other words, if the terminal device determines that the cast type of the TB in the transmitted COT after a last updated contention window value is different from the cast type of the to-be-transmitted TB, or that the TB in the transmitted COT corresponds to at least two cast types, the terminal device determines the reference duration according to the method described in S210.

Optionally, before S210, the method 200 further includes: The terminal device determines that the to-be-transmitted TB corresponds to at least two cast types.

In other words, if the terminal device determines that the to-be-transmitted TB corresponds to at least two cast types, the terminal device determines the reference duration according to the method described in S210.

Optionally, before S210, the method 200 further includes: The terminal device determines that after the last updated contention window value, there is no transmitted TB whose cast type is the same as that of the to-be-transmitted TB.

In other words, if the terminal device determines that after the last updated contention window value, there is no transmitted TB whose cast type is the same as that of the to-be-transmitted TB, the terminal device determines the reference duration according to the method described in S210.

The transmitted TB includes the following two cases: Both an initial transmission and all retransmissions of the TB are completed; feedback information of an initial transmission of the TB is an ACK; or feedback information of a retransmission of the TB is an ACK.

S220: The terminal device determines a target contention window value based on a transmission status of the at least one TB in the reference duration, where the target contention window value is for preempting a channel for the to-be-transmitted TB.

After determining the reference duration, the terminal device determines the target contention window value based on the transmission status of the at least one TB in the reference duration.

In a possible implementation, the terminal device may determine the target contention window value based on a transmission status of a second TB in the reference duration.

For example, the second TB meets condition #A: Both an initial transmission and a retransmission of the second TB are completed, and feedback information of a last retransmission of the second TB is a NACK.

According to a definition of the transmitted TB in the foregoing descriptions, if both the initial transmission and the retransmission of the second TB are completed, it indicates that the second TB is a transmitted TB. Therefore, condition #A may also be understood as that the second TB is a TB that is in the transmitted TB included in the reference duration and for which the feedback information is received by the terminal device.

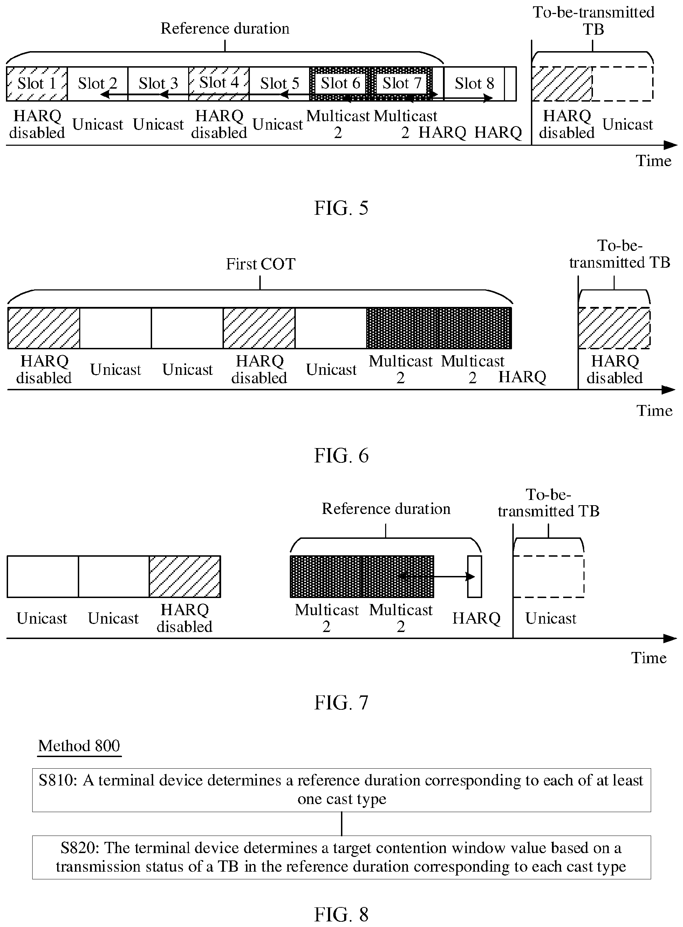

As shown in FIG. 5, the reference duration includes slot 1 to slot 7. Slot 1 is for transmitting a first blind transmission of TB #1, slot 4 is for transmitting a second blind transmission of TB #1, a CAPC of a transmission corresponding to TB #1 is 2, and a cast type of TB #1 is HARQ disabled. Slot 2 is for transmitting an initial transmission of TB #2, slot 3 is for transmitting a first retransmission of TB #2, slot 5 is for transmitting a last retransmission of TB #2, a CAPC of a transmission corresponding to TB #2 is 3, and a cast type of TB #2 is unicast. Slot 6 is for transmitting an initial transmission of TB #3, a CAPC of a transmission corresponding to TB #3 is 2, and a cast type of TB #3 is multicast 2. Slot 7 is for transmitting an initial transmission of TB #4, a CAPC of a transmission corresponding to TB #4 is 2, and a cast type of TB #4 is multicast 2. The terminal device receives, in slot 7, feedback information, namely, a NACK, for the initial transmission of TB #2, feedback information, namely, a NACK, for the first retransmission of TB #2, and feedback information, namely, a NACK, for the last retransmission of TB #2. The terminal device receives, in slot 8, feedback information, namely, an ACK, for the initial transmission of TB #3.

In the TB included in the reference duration, both the initial transmission and the retransmission of TB #2 are completed, and feedback information of the last retransmission of TB #2 is a NACK. Therefore, the terminal device may determine TB #2 as the second TB.

For example, the second TB meets condition #B: Feedback information for an initial transmission or a retransmission of the second TB is an ACK.

According to a definition of the transmitted TB in the foregoing descriptions, if the feedback information of the initial transmission or the retransmission of the second TB is an ACK, it indicates that the second TB is a transmitted TB. Therefore, condition #B may also be understood as that the second TB is a TB that is in the transmitted TB included in the reference duration and for which feedback information is received by the terminal device.

In the foregoing descriptions of FIG. 5, in the TB included in the reference duration, the feedback information of the initial transmission of TB #3 is an ACK. Therefore, the terminal device may determine TB #3 as the second TB.

Based on the foregoing descriptions, condition #A and condition #B may be combined into one condition: The second TB is a TB that is in the transmitted TB included in the reference duration and for which feedback information is received by the terminal device.

For example, the second TB meets condition #C: According to a cast type order, a cast type of the second TB is ranked before a cast type of a remaining TB in the reference duration.

The cast type order is not limited in this embodiment of this application.

For example, the cast type order is predefined, and an order of different cast types from front to back is: multicast 2, multicast 1, unicast, and HARQ disabled. Based on this order, the terminal device may determine TB #3 in the reference duration shown in FIG. 5 as the second TB.

For another example, the cast type order is predefined, and an order of different cast types from front to back is: multicast 2, unicast, multicast 1, and HARQ disabled. Based on this order, the terminal device may determine TB #3 in the reference duration shown in FIG. 5 as the second TB.

For another example, the cast type order is predefined, and an order of different cast types from front to back is: unicast, multicast 2, multicast 1, and HARQ disabled. Based on this order, the terminal device may determine TB #2 in the reference duration shown in FIG. 5 as the second TB.

For another example, an order of different cast types is determined based on a predefined cast type order and the cast type corresponding to the to-be-transmitted TB. Specifically, the cast type corresponding to the to-be-transmitted TB is ranked in the front of other cast types. If the to-be-transmitted TB corresponds to a plurality of cast types, the plurality of cast types corresponding to the to-be-transmitted TB are ranked according to the predefined cast type order. If there are a plurality of remaining cast types different from the cast type corresponding to the to-be-transmitted TB, the remaining cast types are ranked according to the predefined cast type order. Alternatively, a cast type other than HARQ disabled in the cast type corresponding to the to-be-transmitted TB is ranked in the front of other cast types different from the cast type corresponding to the to-be-transmitted TB, and HARQ disabled comes last.

For example, if the predefined cast type order is multicast 2, multicast 1, unicast, and HARQ disabled, and the cast type corresponding to the to-be-transmitted TB is unicast, an order of cast types from front to back that is determined by the terminal device based on the predefined cast type order and the cast type corresponding to the to-be-transmitted TB is: unicast, multicast 2, multicast 1, and HARQ disabled. Based on this order, the terminal device may determine TB #2 in the reference duration shown in FIG. 5 as the second TB.

For example, if the predefined cast type order is multicast 2, multicast 1, unicast, and HARQ disabled, and the cast type of the to-be-transmitted TB includes unicast and HARQ disabled, a cast type order obtained by the terminal device by ranking, based on the predefined cast type order, the cast type corresponding to the to-be-transmitted TB is: unicast and HARQ disabled. Therefore, the terminal device sorts, based on the predefined cast type order, cast types other than the cast type corresponding to the to-be-transmitted TB, to obtain a cast type order: multicast 2 and multicast 1. Further, the terminal device sorts the cast type corresponding to the to-be-transmitted TB in the front of the remaining cast types, so that a determined order of cast types from front to back is: unicast, HARQ disabled, multicast 2, and multicast 1. Based on this order, the terminal device may determine TB #2 in the reference duration shown in FIG. 5 as the second TB.

Alternatively, the terminal device sorts a cast type other than HARQ disabled in the cast type corresponding to the to-be-transmitted TB in the front. To be specific, the terminal device sorts unicast in the front. Then, the terminal device sorts, based on the preset cast type order, cast types other than the cast type corresponding to the to-be-transmitted TB after unicast, and finally HARQ disabled comes last. Therefore, the cast type order determined by the terminal device is: unicast, multicast 2, multicast 1, and HARQ disabled.

For example, if the predefined cast type order is multicast 2, multicast 1, unicast, and HARQ disabled, and the cast type of the to-be-transmitted TB includes unicast and multicast 2, an order of cast types from front to back that is determined by the terminal device based on the predefined cast type order and the cast type corresponding to the to-be-transmitted TB is: multicast 2, unicast, multicast 1, and HARQ disabled. Based on this order, the terminal device may determine TB #3 in the reference duration shown in FIG. 5 as the second TB.

For example, the second TB meets condition #D: A cast type of the second TB is the same as the cast type of the at least one TB in the to-be-transmitted TB.

It may be understood that when the second TB meets condition #D, the second TB is the same as the first TB described above.

In the foregoing descriptions of FIG. 5, because the cast type of TB #1 in the reference duration is the same as the cast type of the at least one to-be-transmitted TB, and the cast type of TB #2 in the reference duration is the same as the cast type of the at least one to-be-transmitted TB, the terminal device may determine TB #1 and/or TB #2 as the second TB.

Optionally, if the reference duration does not include a TB whose cast type is the same as the cast type of the at least one TB in the to-be-transmitted TB, the terminal device selects a TB that meets condition #C.

For example, the second TB meets condition #E: The second TB is a TB that is last transmitted or first transmitted in the reference duration and that is in the TB corresponding to the feedback information received by the terminal device.

In the foregoing descriptions of FIG. 5, because the terminal device receives the feedback information of TB #2 and the feedback information of TB #3, and TB #3 is the TB last transmitted in the reference duration, the terminal device may determine TB #3 as the second TB. Alternatively, because TB #2 is the TB first transmitted in the reference duration, the terminal device may determine TB #2 as the second TB.

For example, the second TB meets condition #F: A transmission priority corresponding to the second TB is the same as the transmission priority corresponding to the to-be-transmitted TB.

It is assumed that in the to-be-transmitted TB shown in FIG. 5, a CAPC of a transmission corresponding to the 1^{st} TB is 3, and a CAPC of a transmission corresponding to the 2^{nd} TB is 1. With reference to the foregoing descriptions of FIG. 5, because the CAPC of a transmission corresponding to TB #2 in the reference duration is 3, the terminal device may determine TB #2 as the second TB.

For example, the second TB meets condition #G: A contention window value determined based on the transmission status of the second TB is greater than a contention window value determined based on a transmission status of a remaining TB in the reference duration.

In other words, the terminal device may determine a candidate contention window value based on a transmission status of each TB in the reference duration, and then determine a largest value in at least one candidate contention window value as the target contention window value.

In the foregoing descriptions of FIG. 5, the TB in the reference duration includes TB #1, TB #2, and TB #3. The terminal device may determine a candidate contention window value CWp1 based on a transmission status of TB #1, determine a candidate contention window value CWp2 based on a transmission status of TB #2, and determine a candidate contention window value CWp3 based on a transmission status of TB #3. Further, the terminal device determines a largest value in CWp1, CWp2, and CWp3 as the target contention window value. It may be understood that the TB corresponding to the largest candidate contention window value is the second TB. For example, if CWp2 is the largest value in CWp1, CWp2, and CWp3, the second TB is TB #2.

For example, the second TB meets condition #H: A contention window value determined based on the transmission status of the second TB is less than a contention window value determined based on a transmission status of a remaining TB in the reference duration.

In other words, the terminal device may determine a candidate contention window value based on a transmission status of each TB in the reference duration, and then determine a smallest value in the at least one candidate contention window value as the target contention window value.

In the foregoing descriptions of FIG. 5, the TB in the reference duration includes TB #1, TB #2, and TB #3. The terminal device may determine a candidate contention window value CWp1 based on a transmission status of TB #1, determine a candidate contention window value CWp2 based on a transmission status of TB #2, and determine a candidate contention window value CWp3 based on a transmission status of TB #3. Further, the terminal device determines a smallest value in CWp1, CWp2, and CWp3 as the target contention window value. It may be understood that the TB corresponding to the smallest candidate contention window value is the second TB. For example, if CWp3 is the smallest value in CWp1, CWp2, and CWp3, the second TB is TB #3.

For example, the second TB meets condition #I: A transmission priority corresponding to the second TB is higher than a transmission priority corresponding to a remaining TB in the reference duration.

In the foregoing descriptions of FIG. 5, because a CAPC of a transmission corresponding to TB #1 and a CAPC of a transmission corresponding to TB #3 are both 2, priorities of the transmission corresponding to TB #1 and the transmission corresponding to TB #3 are higher than a priority of a transmission corresponding to TB #2. That is, the terminal device may determine TB #1 and TB #3 as the second TB.

For example, the second TB meets condition #J: The second TB is a TB, in the TB in the reference duration, for which the terminal device receives feedback information corresponding to the TB.

Condition #J may also be understood as follows: If the reference duration includes a TB whose cast type is HARQ enabled, the terminal device preferentially determines the target contention window value based on a transmission status of a TB that has feedback information and that is in the TB whose cast type is HARQ enabled. Alternatively, condition #J may also be understood as follows: If the reference duration includes a TB whose cast type is HARQ enabled and a TB whose cast type is HARQ disabled, the terminal device preferentially determines the target contention window value based on a transmission status of a TB that has feedback information and that is in the TB whose cast type is HARQ enabled. That the cast type of the TB is HARQ enabled is equivalent to that the cast type of the TB is one of multicast 2, multicast 1, and unicast.

In the foregoing descriptions of FIG. 5, because the terminal device receives the feedback information of TB #2 and the feedback information of TB #3, the terminal device may determine TB #2 and TB #3 as the second TB.

Optionally, the second TB meets a plurality of conditions in condition #A to condition #J.

For example, the second TB meets condition #A and condition #D. In the foregoing descriptions of FIG. 5, both an initial transmission and a retransmission of TB #2 in the reference duration are completed, feedback information of a last retransmission of TB #2 is a NACK, and a cast type of TB #2 is the same as a cast type of one TB in the to-be-transmitted TB. Therefore, TB #2 meets condition #A and condition #D, and the terminal device may determine TB #2 as the second TB.

For another example, the second TB meets condition #C and condition #D. When the second TB meets condition #C and condition #D, the second TB is a TB that is in the TB in the reference duration and whose cast type is ranked in the front and is the same as the cast type of the at least one to-be-transmitted TB. In the foregoing descriptions of FIG. 5, a cast type of TB #1 in the reference duration is the same as a cast type of a TB in the to-be-transmitted TB, and a cast type of TB #2 is the same as a cast type of a TB in the to-be-transmitted TB. If unicast is ranked in the front of HARQ disabled, the terminal device determines TB #2 as the second TB.

For another example, the second TB meets condition #D and condition #F. When the second TB meets condition #D and condition #F, the second TB is a TB that is in the TB in the reference duration and whose corresponding transmission priority is the same as the transmission priority corresponding to the to-be-transmitted TB, where a cast type of the TB is the same as the cast type of the at least one TB in the to-be-transmitted TB. In the foregoing descriptions of FIG. 5, if a CAPC of a transmission corresponding to the to-be-transmitted TB is 3, a CAPC of a transmission corresponding to TB #2 in the reference duration is 3, and a cast type of TB #2 is the same as a cast type of a TB in the to-be-transmitted TB, the terminal device may determine TB #2 as the second TB.

For another example, the second TB meets condition #E and condition #J. When the second TB meets condition #E and condition #I, the second TB is a TB, in the TB in the reference duration, for which feedback information is received by the terminal device and whose corresponding transmission priority is the same as the transmission priority corresponding to the to-be-transmitted TB. In the foregoing descriptions of FIG. 5, a CAPC corresponding to the to-be-transmitted TB is 3, a CAPC of a transmission corresponding to TB #2 in the reference duration is 3, and the terminal device receives feedback information of TB #2. Therefore, the terminal device may determine TB #2 as the second TB.

It should be noted that the foregoing lists only several examples in which the second TB meets two conditions in condition #A to condition #J. A specific condition and a quantity of conditions that the second TB meets is not limited in this embodiment of this application. For example, the second TB may meet condition #A, condition #D, and condition #E.

It may be understood that if the cast type of the second TB determined by the terminal device is the same as the cast type of the at least one TB in the to-be-transmitted TB, the second TB is the same as the first TB described above.

After the terminal device determines the second TB based on one or more of condition #A to condition #J, the terminal device may determine the target contention window value based on the transmission status of the second TB.

For example, if the terminal device determines one second TB, the terminal device determines the target contention window value based on a transmission status of the second TB.

For example, if the cast type of the second TB is HARQ enabled, and the terminal device has received feedback information of the second TB, the terminal device may determine the target contention window value based on the feedback information of the second TB. For example, if the feedback information of the second TB is an ACK, the terminal device may determine the target contention window value as a smallest value in a target value range. If the feedback information of the second TB is a NACK, the terminal device may determine the target contention window value as a value that is in the target value range and that is greater than a contention window value of the first COT. The target value range is a value range of a contention window value corresponding to the transmission priority corresponding to the to-be-transmitted TB. For example, if a CAPC of a transmission corresponding to the to-be-transmitted TB is 2, the target value range is {7, 15} according to Table 1. The contention window value of the first COT is a contention window value used when the terminal device obtains the first COT.

For example, if the contention window value of the first COT is 4, and the CAPC of the transmission corresponding to the to-be-transmitted TB is 2, when the feedback information of the second TB is an ACK, the terminal device may determine the target contention window value as 7; when the feedback information of the second TB is a NACK, the terminal device may determine the target contention window value as 15.

For another example, if the cast type of the second TB is HARQ enabled, and the terminal device does not receive the feedback information of the second TB, the terminal device may determine that a contention window value remains unchanged, that is, the terminal device determines the contention window value of the first COT as the target contention window value. Alternatively, if the cast type of the second TB is HARQ enabled, and the terminal device does not receive the feedback information of the second TB, the terminal device may determine the target contention window value based on a proportion of a retransmitted TB in the to-be-transmitted TB.

That the terminal device does not receive the feedback information of the second TB includes the following two cases: The terminal device does not receive the feedback information of the second TB in a slot in which the terminal device is expected to receive the feedback information of the second TB; the terminal device does not receive the feedback information of the second TB at a moment at which the terminal device determines the target contention window value; or a moment at which the terminal device determines the target contention window value is earlier than a moment at which the terminal device receives or processes the feedback information of the second TB.

For another example, if the cast type of the second TB is HARQ disabled, the terminal device determines the target contention window value based on a quantity of blind transmissions or a blind transmission proportion of the second TB. For example, if the quantity of blind transmissions or the blind transmission proportion of the second TB exceeds preset threshold #1, the terminal device may determine the target contention window value as a value that is in the target value range and that is greater than the contention window value of the first COT. If the quantity of blind transmissions or the blind transmission proportion of the second TB is less than preset threshold #1, the terminal device may determine the target contention window value as a smallest value in the target value range.

It should be noted that the foregoing describes, by using an example, a manner in which the terminal device determines the target contention window value based on a transmission status of one second TB. This is not limited in this embodiment of this application. A manner in which the terminal device determines the target contention window value based on a transmission status of one second TB may be another manner. For example, if the cast type of the second TB is HARQ disabled, the terminal device may determine the contention window value of the first COT as the target contention window value.

For example, if the terminal device determines M second TBs, the terminal device may determine the target contention window value based on a transmission status of one of the M second TBs. M is an integer greater than 1.

For example, the terminal device may determine the target contention window value based on a transmission status of a last transmitted second TB in the M second TBs. Alternatively, the terminal device may determine the target contention window value based on a transmission status of a second TB first transmitted in the M second TBs.

For example, if the terminal device determines M second TBs, the terminal device may determine the target contention window value based on transmission statuses of the M second TBs. A manner in which the terminal device determines the target contention window value based on transmission statuses of the M second TBs includes the following several manners:

### Manner 1:

The terminal device determines N candidate contention window values based on the transmission statuses of the M second TBs, and further the terminal device determines the target contention window value based on the N candidate contention window values. The target contention window value is a largest value in the N candidate contention window values; the target contention window value is a smallest value in the N candidate contention window values; the target contention window value is a candidate contention window value that is in the N candidate contention window values and greater than an average value of the N candidate contention window values and that has a smallest difference from the average value; or the target contention window value is a candidate contention window value in the N candidate contention window values, where an absolute value of a difference between the candidate contention window value and an average value of the N candidate contention window values is the smallest. N is a positive integer, and N≤M.

A manner in which the terminal device determines N candidate contention window values based on the transmission statuses of the M second TBs includes the following several manners:

### Manner A:

The terminal device determines one candidate contention window value based on a transmission status of each of the M second TBs, so that the terminal device can determine a total of M candidate contention window values. For example, if the M second TBs include TB #A and TB #B, the terminal device may determine a candidate contention window value based on a transmission status of TB #A, and then determine a candidate contention window value based on a transmission status of TB #B.

### Manner B:

The terminal device determines a candidate contention window value based on transmission statuses of second TBs that are in the M second TBs and that have a same cast type, so that a quantity of candidate contention window values determined by the terminal device is the same as a quantity of cast types corresponding to the M second TBs. For example, the M second TBs include TB #A, TB #B, and TB #C, cast types of TB #A and TB #B are the same, and a cast type of TB #C is different from the cast types of TB #A and TB #B. In this case, the terminal device may determine a candidate contention window value based on transmission statuses of TB #A and TB #B, and then determine a candidate contention window value based on a transmission status of TB #C.

If the M second TBs include a plurality of second TBs with a same cast type, for a manner in which the terminal device determines a candidate contention window value based on the plurality of second TBs with the same cast type, refer to the foregoing manner 1, or refer to the following manner 2 or manner 3.

### Manner 2:

The terminal device collects statistics about feedback information of the M second TBs; and further the terminal device determines the target contention window value based on the feedback information of the M second TBs.

For example, the terminal device collects statistics about the feedback information of the M second TBs in the following manner: if a cast type of a TB is unicast, collecting statistics about feedback information of an initial transmission and feedback information of each retransmission of the TB, collecting statistics about ACK feedback information of the TB, or collecting statistics about feedback information of a last retransmission of the TB; if a cast type of a TB is multicast 1 and feedback information of the TB is a NACK, denoting a quantity of pieces of feedback information of the TB as 1; if a cast type of a TB is multicast 2 and feedback information of the TB is not a NACK, denoting the feedback information of the TB as an ACK, and denoting a quantity of pieces of feedback information of the TB as 1, L, or L-1, where L is a quantity of terminal devices included in a terminal device group configured to receive the TB; or if a cast type of a TB is multicast 2, collecting statistics about each piece of feedback information of the TB.

It should be noted that if the cast type of the TB is HARQ disabled, the terminal device does not receive feedback information of the TB, and the terminal device does not collect statistics about feedback information of a TB whose cast type is HARQ disabled.

It should be further noted that, if the cast type of the TB is multicast 1 or multicast 2, the terminal device may collect statistics about feedback information of an initial transmission of the TB and/or feedback information of each retransmission of the TB, collect statistics about feedback information of a last retransmission of the TB, collect statistics about feedback information that is not a NACK for the TB, or collect statistics about feedback information that is not an ACK for the TB.

For example, it is assumed that the M second TBs include TB #A, TB #B, and TB #C. A cast type of TB #A is unicast, the reference duration includes an initial transmission and a first retransmission of TB #A, feedback information of the initial transmission of TB #A is a NACK, and feedback information of the retransmission of TB #A is an ACK. A cast type of TB #B is multicast 1, the reference duration includes an initial transmission of TB #B, and feedback information of the initial transmission of TB #B is not a NACK. A cast type of TB #C is multicast 2, the reference duration includes an initial transmission of TB #C, feedback information of the initial transmission of TB #C includes SACKs and T NACKs, and both S and T are integers greater than or equal to 0.

If the terminal device collects statistics about feedback information of each transmission of TB #A, the terminal device collects statistics about two pieces of feedback information of TB #A in total, where one piece of feedback information is an ACK, and the other piece of feedback information is a NACK. For TB #B, if a quantity of terminal devices included in a terminal device group configured to receive TB #B is L1, the terminal device denotes feedback information of TB #B as an ACK, and may denote a quantity of ACKs as L1-1. For TB #C, the terminal device counts a quantity of ACKs for TB #C as S, and a quantity of NACKs for TB #C as T. Further, the terminal device counts a quantity of pieces of feedback information of the M second TBs as (S+T+L1+1), where a quantity of ACKs is (L1+S), and a quantity of NACKs is (T+1).

It should be noted that, in the foregoing example, the terminal device collects statistics about feedback information of each transmission of TB #A. In specific implementation, the terminal device may collect statistics about feedback information of each transmission of a TB whose cast type is unicast, or the terminal device may collect statistics about ACK feedback information of a TB whose cast type is unicast, or collect statistics about feedback information of a last retransmission. This is not limited in this embodiment of this application. In other words, the terminal device collects statistics about feedback information once for a TB whose cast type is unicast.

After collecting statistics about the feedback information of the M second TBs, the terminal device may determine the target contention window value based on a statistical result. For example, if a proportion of ACKs in the feedback information of the M second TBs exceeds preset threshold #2, the terminal device may determine that the target contention window value is a smallest value in the target value range. If the proportion of the ACKs in the feedback information of the M second TBs is less than preset threshold #2, the terminal device may determine that the target contention window value is a value that is in the target value range and that is greater than the contention window value of the first COT. For another example, if a proportion of NACKs in the feedback information of the M second TBs exceeds preset threshold #3, the terminal device may determine that the target contention window value is a value that is in the target value range and that is greater than the contention window value of the first COT. If the proportion of the NACKs in the feedback information of the M second TBs is less than preset threshold #3, the terminal device may determine that the target contention window value is a smallest value in the target value range.

It should be noted that if the terminal device does not obtain the feedback information of the M second TBs through statistics collection, in other words, the terminal device does not receive feedback information of a TB that is in the M second TBs and whose cast type is HARQ enabled, the terminal device may determine that the contention window value remains unchanged. That is, the terminal device determines the contention window value of the first COT as the target contention window value. Alternatively, if the terminal device does not obtain the feedback information of the M second TBs through statistics collection, the terminal device may determine the target contention window value based on a proportion of a retransmitted TB in the to-be-transmitted TB.

### Manner 3:

The terminal device sequentially updates a contention window value based on the transmission statuses of the M second TBs according to a transmission sequence of the M second TBs or a sequence of receiving feedback information of the M second TBs, until the target contention window value is determined.

Specifically, the terminal device determines the 1^{st} intermediate contention window value based on a transmission status of the 1^{st} second TB in the M second TBs according to the transmission sequence of the M second TBs or the sequence of receiving the feedback information of the M second TBs; then determines the 2^{nd} intermediate contention window value based on a transmission status of the 2^{nd} second TB in the M second TBs and the 1^{st} intermediate contention window value; ...; and finally determines the target contention window value based on a transmission status of the M^{th} second TB in the M second TBs and an (M-1)^{th} intermediate contention window value.

For example, the M second TBs include TB #A, TB #B, and TB #C, and TB #A to TB #C are ranked in a transmission sequence as follows: TB #A, TB #B, and TB #C. Assuming that the contention window value of the first COT is 31, the CAPC of the transmission corresponding to the to-be-transmitted TB is 3, and feedback information of TB #Ais an ACK, the terminal device may determine the 1^{st} intermediate contention window value as 15. Further, if feedback information of TB #B is a NACK, the terminal device may determine the 2^{nd} intermediate contention window value as a value greater than 15, for example, 31. Further, if feedback information of TB #C is a NACK, the terminal device may determine the target contention window value as a value greater than 31, for example, 63.

In another possible implementation, the terminal device may determine the target contention window value based on the transmission status of the at least one TB in the reference duration.

For example, the at least one TB may include one TB. For example, the terminal device may determine the target contention window value based on a transmission status of a last transmitted TB in the reference duration. For a manner in which the terminal device determines the target contention window value based on the transmission status of the at least one TB in the reference duration, refer to the foregoing described manner in which the terminal device determines the target contention window value based on a transmission status of one second TB.

For example, the at least one TB may include a plurality of TBs. For example, the terminal device may determine the target contention window value based on transmission statuses of all TBs or a plurality of TBs in the reference duration. When the at least one TB includes a plurality of TBs, for a manner in which the terminal device determines the target contention window value based on the transmission status of the at least one TB in the reference duration, refer to the foregoing described manner in which the terminal device determines the target contention window value based on the transmission statuses of M second TBs.

For example, refer to the foregoing manner 1. The terminal device may determine at least one candidate contention window value based on the transmission status of the at least one TB, and the terminal device determines the target contention window value based on the at least one candidate contention window value. The target contention window value is a largest value in the at least one candidate contention window value; the target contention window value is a smallest value in the at least one candidate contention window value; the target contention window value is a candidate contention window value that is in the at least one candidate contention window value and greater than an average value of the at least one candidate contention window value and that has a smallest difference from the average value; or the target contention window value is a candidate contention window value in the at least one candidate contention window value, where an absolute value of a difference between the candidate contention window value and an average value of the at least one candidate contention window value is the smallest.

For example, refer to the foregoing manner 2. The terminal device may collect statistics about feedback information of the at least one TB; and the terminal device determines the target contention window value based on the feedback information of the at least one TB.

As shown in FIG. 6, the reference duration includes TB #A whose cast type is HARQ disabled, TB #B whose cast type is unicast, and TB #C whose cast type is multicast 2. In this case, the terminal device collects statistics about feedback information of TB #B and TB #C, and determines the target contention window value based on the feedback information of TB #B and TB #C. For example, the terminal device determines the target contention window value based on an ACK proportion and/or a NACK proportion in the feedback information of TB #B and TB #C.

For a manner in which the terminal device collects statistics about the feedback information of the at least one TB, refer to the foregoing manner in which the terminal device collects statistics about the feedback information of the M second TBs.

For example, refer to the foregoing manner 3. The terminal device sequentially updates a contention window value based on the transmission status of the at least one TB according to a transmission sequence of the at least one TB or a sequence of receiving the feedback information of the at least one TB, until the target contention window value is determined.

In another possible implementation, if the reference duration includes the at least one transmitted TB, and the at least one transmitted TB is a TB that is latest transmitted after a last updated contention window value, the terminal device determines the target contention window value based on a transmission status of the TB that is latest transmitted.

For example, if a cast type of the latest transmitted TB is HARQ enabled, the terminal device determines the target contention window value based on feedback information of the latest transmitted TB. For example, if the reference duration includes a last retransmission of the latest transmitted TB, and feedback information of the last retransmission is a NACK, the terminal device may determine that the target contention window value is a value that is in the target value range and that is greater than the contention window value of the first COT. For example, if the reference duration includes an initial transmission of the latest transmitted TB, and feedback information of the initial transmission is an ACK, the terminal device may determine that the target contention window value is a smallest value in the target value range.

For example, if a cast type of the latest transmitted TB is HARQ disabled, the terminal device may determine the target contention window value based on a quantity of blind transmissions or a blind transmission proportion of the latest transmitted TB. For example, if the quantity of blind transmissions or the blind transmission proportion of the latest transmitted TB exceeds preset threshold #1, the terminal device may determine the target contention window value as a value that is in the target value range and that is greater than the contention window value of the first COT. If the quantity of blind transmissions or the blind transmission proportion of the latest transmitted TB is less than preset threshold #1, the terminal device may determine the target contention window value as a smallest value in the target value range.

In another possible implementation, if the first COT is a COT closest to a current moment, the terminal device may determine the target contention window value based on a transmission status of the latest transmitted TB in the reference duration.

For example, if the terminal device does not receive the feedback information of the latest transmitted TB, the terminal device determines that the contention window value remains unchanged, that is, the terminal device determines the contention window value of the first COT as the target contention window value. Alternatively, if the terminal device does not receive the feedback information of the latest transmitted TB, the terminal device may determine the target contention window value based on a proportion of a retransmitted TB in the to-be-transmitted TB.

That the terminal device does not receive the feedback information of the latest transmitted TB includes the following two cases: The terminal device does not receive the feedback information of the latest transmitted TB in a slot in which the terminal device is expected to receive the feedback information of the latest transmitted TB; the terminal device does not receive the feedback information of the latest transmitted TB at a moment at which the terminal device determines the target contention window value; or a moment at which the terminal device determines the target contention window value is earlier than a moment at which the terminal device receives or processes the feedback information of the latest transmitted TB.

It may be understood that, when the terminal device does not receive feedback information of a TB, it may be considered that the TB is a TB for which transmission is not completed.

For example, if the terminal device receives the feedback information of the latest transmitted TB, the terminal device determines the target contention window value based on the feedback information of the latest transmitted TB.

For example, as shown in FIG. 7, the reference duration determined by the terminal device includes a latest transmitted TB, namely, a TB whose cast type is multicast 2 shown in FIG. 7, and the terminal device receives feedback information of a TB whose cast type is multicast 2. In this case, the terminal device may determine the target contention window value based on the feedback information of the TB whose cast type is multicast 2.

After determining the target contention window value, the terminal device may preempt a channel for the to-be-transmitted TB based on the target contention window value. For example, the terminal device determines a random number Nᵢₙᵢₜ based on the target contention window value, and a value of the random number Nᵢₙᵢₜ ranges from 0 to the target contention window value (including 0 but not including the target contention window value). If a quantity of slots in which the terminal device senses that a channel is idle reaches Nᵢₙᵢₜ, the terminal device preempts the channel for the to-be-transmitted TB, so that the terminal device can transmit the to-be-transmitted TB.

In this embodiment of this application, the terminal device may determine an appropriate contention window value based on the transmission status of the at least one TB in the reference duration, to avoid a mutual collision between different devices and improve system transmission efficiency. For example, if the at least one TB in the reference duration is successfully transmitted, the terminal device may determine a small contention window value, to reduce an LBT duration and improve channel access efficiency. If the at least one TB in the reference duration fails to be transmitted, the terminal device may determine a large contention window value, to prolong an LBT duration, to reduce a possibility that the terminal device collides with another surrounding device.

In addition, even if the cast type of the TB in the COT to which the reference duration belongs is different from the cast type of the to-be-transmitted TB, the TB in the COT to which the reference duration belongs corresponds to at least two cast types, or the to-be-transmitted TB corresponds to at least two cast types, according to this embodiment of this application, the reference duration may be determined, and a contention window value may be determined based on the transmission status of the at least one TB in the reference duration.

FIG. 8 is a schematic flowchart of a contention window value determining method 800 according to an embodiment of this application. The method 800 may include the following steps.

S810: A terminal device determines a reference duration corresponding to each of at least one cast type.

The at least one cast type is a cast type of at least one TB in a to-be-transmitted TB.

For example, the at least one cast type may be a cast type of a TB with a lowest transmission priority in the to-be-transmitted TB.

For another example, the at least one cast type may include all cast types corresponding to the to-be-transmitted TB.

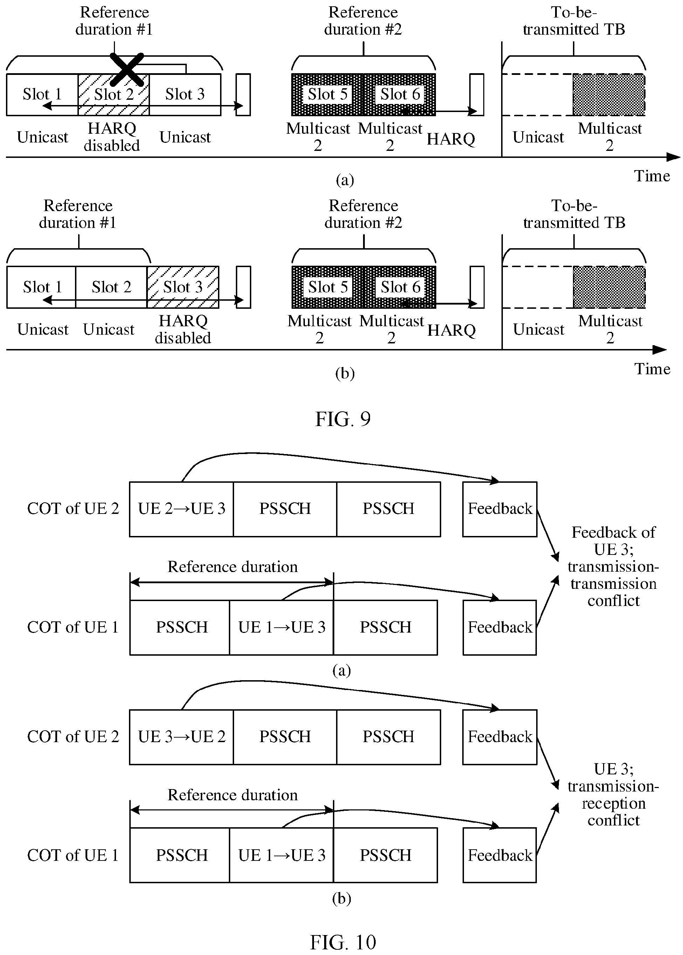

As shown in FIG. 9, the to-be-transmitted TB includes two TBs, a cast type of one TB is unicast, and a cast type of the other TB is multicast 2. A CAPC of a transmission corresponding to the TB whose cast type is unicast is 2, and a CAPC of a transmission corresponding to the TB whose cast type is multicast 2 is 3.

In a possible implementation, the at least one cast type includes all possible cast types. For example, if the at least one cast type includes unicast, multicast 1, multicast 2, and HARQ disabled, the terminal device determines a reference duration corresponding to unicast, a reference duration corresponding to multicast 1, a reference duration corresponding to multicast 2, and a reference duration corresponding to HARQ disable.

If the at least one cast type is a cast type of a TB that corresponds to a lowest transmission priority in the to-be-transmitted TB, the terminal device may determine that the at least one cast type is multicast 2. Further, in S810, the terminal device determines reference duration #1 corresponding to multicast 2.

If the at least one cast type includes all cast types corresponding to the to-be-transmitted TB, the terminal device may determine that the at least one cast type includes multicast 2 and unicast. Further, in S810, the terminal device determines reference duration #1 corresponding to unicast, and determines reference duration #2 corresponding to multicast 2.

A cast type of a TB in a reference duration determined by the terminal device for each cast type is the same as a cast type corresponding to the reference duration. For example, as shown in FIG. 9, a cast type of a TB in reference duration #2 determined by the terminal device for multicast 2 is multicast 2, and a cast type of a TB in reference duration #1 determined by the terminal device for unicast is unicast.

It should be noted that reference durations determined by the terminal device for all cast types may be consecutive or inconsecutive. As shown in (a) in FIG. 9, reference durations #2 determined by the terminal device for multicast 2 are consecutive, and reference durations #1 determined for unicast are inconsecutive. To be specific, reference duration #1 includes a TB whose cast type is unicast, but does not include a TB whose cast type is HARQ disabled between two TBs whose cast types are unicast. Further, as shown in (b) in FIG. 9, reference durations #1 determined by the terminal device for unicast are consecutive, and reference durations #2 determined for multicast 2 are also consecutive.

A priority of a COT to which each reference duration determined by the terminal device belongs is the same as a transmission priority corresponding to the to-be-transmitted TB. For a definition of the priority of the COT and a definition of the transmission priority corresponding to the to-be-transmitted TB, refer to the foregoing descriptions in S210.

For example, a TB in the COT to which each reference duration belongs corresponds to at least two cast types, or the to-be-transmitted TB corresponds to at least two cast types.

The following uses cast type #1 in the at least one cast type as an example to describe another feature that may be of a reference duration determined by the terminal device for cast type #1. For ease of description, a COT to which the reference duration corresponding to cast type #1 belongs is denoted as a second COT.

For example, the reference duration corresponding to cast type #1 includes a TB whose cast type is cast type #1.

Optionally, after a last updated contention window value, if the terminal device may determine a plurality of candidate reference durations including the TB whose cast type is cast type #1, the reference duration finally determined by the terminal device may be a candidate reference duration that is in the plurality of candidate reference durations and closest to a current moment, where a priority of a COT to which the candidate reference duration belongs is the same as the transmission priority corresponding to the to-be-transmitted TB.

In other words, the second COT is a COT that has a same transmission priority as the to-be-transmitted TB, includes the TB whose cast type is cast type #1, and is closest to the current moment.

It should be noted that the TB whose cast type is cast type #1 and that is included in the reference duration may be a transmitted TB, or may be a TB for which transmission is not completed. This is not limited in this application. For example, the TB whose cast type is cast type #1 and that is included in the reference duration is a latest transmitted TB whose cast type is cast type #1.

For example, the reference duration corresponding to cast type #1 includes at least one transmitted TB whose cast type is cast type #1.

Optionally, after a last updated contention window value, if the terminal device may determine a plurality of candidate reference durations including a transmitted TB whose cast type is cast type #1, the reference duration finally determined by the terminal device may be a candidate reference duration that is in the plurality of candidate reference durations and closest to a current moment, where a priority of a COT to which the candidate reference duration belongs is the same as the transmission priority corresponding to the to-be-transmitted TB.

In other words, the second COT is a COT that has a same transmission priority as the to-be-transmitted TB, includes at least one transmitted TB whose cast type is cast type #1, and is closest to the current moment.

Optionally, if there is no transmitted TB whose cast type is cast type #1 after a last updated contention window value, the reference duration corresponding to cast type #1 includes a latest transmitted TB whose cast type is cast type #1.

Optionally, the terminal device may first determine the second COT, and then determine the reference duration based on the second COT to which the reference duration belongs. The following describes a manner in which the terminal device determines the first COT.

For example, the second COT is a COT that has a same transmission priority as the to-be-transmitted TB, includes the TB whose cast type is cast type #1, and is closest to a current moment. In other words, the terminal device may determine, as the second COT, a COT that is in the transmitted COT after a last updated contention window value and whose priority is the same as the transmission priority corresponding to the to-be-transmitted TB, where the COT includes the TB whose cast type is cast type #1 and is closest to the current moment. In this way, the terminal device may determine, based on the second COT, the reference duration corresponding to cast type #1.

Optionally, the second COT is a COT that has a same transmission priority as the to-be-transmitted TB, includes at least one transmitted TB whose cast type is cast type #1, and is closest to the current moment. In other words, the terminal device may determine, as the second COT, a COT that is in the transmitted COT after a last updated contention window value and whose priority is the same as the transmission priority corresponding to the to-be-transmitted TB, where the COT includes at least one transmitted TB, and a cast type of the at least one transmitted TB is cast type #1. In this way, the terminal device may determine, based on the second COT, the reference duration corresponding to cast type #1.

For a definition that the reference duration or the second COT includes one transmitted TB, refer to the foregoing descriptions in S210.

The following describes a relationship between the reference duration corresponding to cast type #1 and the second COT.

For example, the reference duration corresponding to cast type #1 includes all TBs whose cast types are cast type #1 in the second COT. In other words, a start moment of cast type #1 is a transmission start moment of a TB that is first transmitted and whose cast type is cast type #1 in the second COT, and an end moment of cast type #1 is a transmission end moment of a TB that is last transmitted and whose cast type is cast type #1 in the second COT. As shown in FIG. 9, reference duration #1 includes all TBs whose cast types are unicast in a COT to which reference duration #1 belongs, and reference duration #2 includes all TBs whose cast types are multicast 2 in a COT to which the reference duration #2 belongs. As shown in (a) in FIG. 9, reference duration #1 includes slot 1 and slot 3 that are for transmitting a TB whose cast type is unicast, and reference duration #2 includes slot 5 and slot 6 that are for transmitting a TB whose cast type is multicast 2. As shown in (b) in FIG. 9, reference duration #1 includes slot 1 and slot 2 that are for transmitting a TB whose cast type is unicast, and reference duration #2 includes slot 5 and slot 6 that are for transmitting a TB whose cast type is multicast 2.

For example, the reference duration corresponding to cast type #1 includes a TB that is last transmitted and whose cast type is cast type #1 in the second COT. For example, if the second COT includes two TBs whose cast types are cast type #1, namely, TB #a and TB #b, where TB #b is a last transmitted TB, the reference duration corresponding to cast type #1 includes TB #b. In other words, a start moment of the reference duration corresponding to cast type #1 is a transmission start moment of TB #b, and an end moment of the reference duration corresponding to cast type #1 is a transmission end moment of TB #b. As shown in FIG. 9, reference duration #1 is used as an example. Reference duration #1 includes the 2^{nd} TB whose cast type is unicast shown in FIG. 9. To be specific, reference duration #1 includes slot 3 that is shown in (a) in FIG. 9 and that is for transmitting a TB whose cast type is unicast, or reference duration #1 includes slot 2 that is shown in (b) in FIG. 9 and that is for transmitting a TB whose cast type is unicast.

For example, the reference duration corresponding to cast type #1 includes a transmitted TB whose cast type is cast type #1 in the second COT. For example, if the second COT includes two TBs whose cast types are cast type #1, namely, TB #a and TB #b, where TB #b is a transmitted TB, the reference duration corresponding to cast type #1 includes TB #b. In other words, a start moment of the reference duration corresponding to cast type #1 is a transmission start moment of TB #b, and an end moment of the reference duration corresponding to cast type #1 is a transmission end moment of TB #b. As shown in FIG. 9, reference duration #1 is used as an example. If the 2^{nd} TB whose cast type is unicast shown in FIG. 9 is a transmitted TB, reference duration #1 includes the 2^{nd} TB whose cast type is unicast shown in FIG. 9. To be specific, reference duration #1 includes slot 3 that is shown in (a) in FIG. 9 and that is for transmitting a TB whose cast type is unicast, or reference duration #1 includes slot 2 that is shown in (b) in FIG. 9 and that is for transmitting a TB whose cast type is unicast.

For example, the reference duration corresponding to cast type #1 includes a TB that has feedback information and whose cast type is cast type #1 in the second COT. For example, if the second COT includes two TBs whose cast types are cast type #1, namely, TB #a and TB #b, and the terminal device receives feedback information of TB #a but does not receive feedback information of TB #b, the reference duration corresponding to cast type #1 includes TB #a. In other words, a start moment of the reference duration corresponding to cast type #1 is a transmission start moment of TB #a, and an end moment of the reference duration corresponding to cast type #1 is a transmission end moment of TB #a. As shown in FIG. 9, reference duration #1 is used as an example. If the terminal device receives feedback information of the 1^{st} TB whose cast type is unicast shown in FIG. 9, reference duration #1 includes the 1^{st} TB whose cast type is unicast shown in FIG. 9. To be specific, reference duration #1 includes slot 1 that is shown in (a) in FIG. 9 and that is for transmitting the TB whose cast type is unicast, or reference duration #1 includes slot 1 that is shown in (b) in FIG. 9 and that is for transmitting the TB whose cast type is unicast.

For example, the reference duration corresponding to cast type #1 includes a TB that has feedback information in the second COT, that is first or last transmitted, and whose cast type is cast type #1. For example, if the second COT includes two TBs whose cast types are cast type #1, namely, TB #a and TB #b, and the terminal device receives feedback information of TB #a and TB #b, the reference duration corresponding to cast type #1 includes first transmitted TB #a, or the reference duration corresponding to cast type #1 includes last transmitted TB #b.

For example, the reference duration corresponding to cast type #1 includes the 1^{st} transmission slot of a TB that has feedback information, that is first transmitted, and whose cast type is cast type #1 in the second COT. For example, if the second COT includes two TBs whose cast types are cast type #1, namely, TB #a and TB #b, and the terminal device receives feedback information of TB #a and TB #b, the reference duration corresponding to cast type #1 includes the 1^{st} transmission slot of TB #a that is first transmitted. For example, a start moment of the reference duration corresponding to cast type #1 is a start moment of a COT to which the reference duration belongs, and an end moment of the reference duration corresponding to cast type #1 is an end moment of the 1^{st} transmission slot of TB #a.

It should be noted that if the terminal device determines the reference duration corresponding to each of the plurality of cast types, reference durations corresponding to different cast types may belong to a same COT or different COTs. This is not limited in this embodiment of this application.

Optionally, before S810, the method 800 further includes: The terminal device determines that a TB in a transmitted COT after a last updated contention window value corresponds to at least two cast types.

In other words, if the terminal device determines that the TB in the transmitted COT after a last updated contention window value corresponds to at least two cast types, the terminal device determines the reference duration according to the method described in S810.

Optionally, before S810, the method 800 further includes: The terminal device determines that the to-be-transmitted TB corresponds to at least two cast types.

In other words, if the terminal device determines that the to-be-transmitted TB corresponds to at least two cast types, the terminal device determines the reference duration according to the method described in S810.

It should be noted that, if the terminal device determines that after the last updated contention window value, there is no TB whose cast type is the same as that of the to-be-transmitted TB, the terminal device may determine the reference duration according to the foregoing method 200, and determine a target contention window value.

S820: The terminal device determines the target contention window value based on a transmission status of a TB in the reference duration corresponding to each cast type.

The target contention window value is for preempting a channel for the to-be-transmitted TB.

In a possible implementation, if the at least one cast type includes one cast type, the terminal device determines one reference duration. Further, the terminal device may determine the target contention window value based on a transmission status of a TB in the reference duration.

If the reference duration includes one TB, for a manner in which the terminal device determines the target contention window value based on the transmission status of the TB in the reference duration, refer to the manner in which the terminal device determines the target contention window value based on the transmission status of the second TB described in S220.

If the reference duration includes a plurality of TBs, for a manner in which the terminal device determines the target contention window value based on the transmission status of the TB in the reference duration, refer to the manner in which the terminal device determines the target contention window value based on the transmission statuses of the M second TBs described in S220.

In another possible implementation, if the at least one cast type includes a plurality of cast types, a manner in which the terminal device determines the target contention window value based on the transmission status of the TB in the reference duration corresponding to each cast type includes: The terminal device determines the at least one candidate contention window value based on the transmission status of the TB in the reference duration corresponding to each of the at least one cast type; and then the terminal device determines the target contention window value based on the at least one candidate contention window value.

The target contention window value is a largest value in the at least one candidate contention window value; the target contention window value is a smallest value in the at least one candidate contention window value; the target contention window value is a candidate contention window value that is in the at least one candidate contention window value and greater than an average value of the at least one candidate contention window value and that has a smallest difference from the average value; or the target contention window value is a candidate contention window value in the at least one candidate contention window value, where an absolute value of a difference between the candidate contention window value and an average value of the at least one candidate contention window value is the smallest.

As shown in FIG. 9, if the terminal device determines reference duration #1 corresponding to unicast and reference duration #2 corresponding to multicast 2, the terminal device determines a candidate contention window value based on a transmission status of a TB in reference duration #1, and determines a candidate contention window value based on a transmission status of a TB in reference duration #2. Further, the terminal device determines the target contention window value based on the two candidate contention window values.

If the terminal device determines a plurality of reference durations, and one of the plurality of reference durations includes one TB, for a manner in which the terminal device determines a candidate contention window value based on a transmission status of the TB in the reference duration, refer to the manner in which the terminal device determines the target contention window value based on a transmission status of one second TB described in S220.

If the terminal device determines one reference duration, and one reference time includes a plurality of TBs, for a manner in which the terminal device determines a candidate contention window value based on a transmission status of a TB in the reference duration, refer to the manner in which the terminal device determines the target contention window value based on the transmission statuses of the M second TBs described in S220.

After determining the target contention window value, the terminal device may preempt a channel for the to-be-transmitted TB based on the target contention window value. For example, the terminal device determines a random number Nᵢₙᵢₜ based on the target contention window value, and a value of the random number Nᵢₙᵢₜ ranges from 0 to the target contention window value (including 0 but not including the target contention window value). If a quantity of slots in which the terminal device senses that a channel is idle reaches Nᵢₙᵢₜ, the terminal device preempts the channel for the to-be-transmitted TB, so that the terminal device can transmit the to-be-transmitted TB.

In this embodiment of this application, even if a TB in the COT to which the reference duration belongs corresponds to at least two cast types, or the to-be-transmitted TB corresponds to at least two cast types, the terminal device may determine the reference duration corresponding to each of the at least one cast type, and determine a contention window value based on the transmission status of the TB in the reference duration. This helps determine an appropriate contention window value, to avoid a mutual collision between different devices and improve system transmission efficiency.

In a possible implementation, the reference duration may be determined in the following manner: The reference duration is within a COT, a start moment of the reference duration is a start moment of the COT to which the reference duration belongs, and an end moment of the reference duration is an end moment of the 1^{st} slot that meets the following condition in the COT to which the reference duration belongs: At least one hybrid automatic repeat request-acknowledgement enabled (HARQ-ACK enabled) PSSCH is transmitted, or at least one acknowledgement/negative acknowledgement hybrid automatic repeat request-acknowledgment enabled (ACK/NACK HARQ-ACK enabled) PSSCH is transmitted. It should be understood that the at least one HARQ-ACK enabled PSSCH or ACK/NACK HARQ-ACK enabled PSSCH is a PSSCH sent by a terminal device (a terminal device that is about to adjust a contention window value) that initializes the COT.

However, when the contention window value is adjusted based on the reference duration, the following problem may exist: If only one HARQ-ACK enabled PSSCH or ACK/NACK HARQ-ACK enabled PSSCH is transmitted before the end moment of the reference duration, and a PSFCH of the PSSCH is not successfully transmitted by a receiving terminal device of the PSSCH due to a PSFCH transmission-reception conflict or transmission-transmission conflict, a HARQ of the PSSCH cannot be detected by a sending terminal device (that is, a terminal device that initializes the COT) of the PSSCH. Consequently, the sending terminal device does not have sufficient information to determine how to adjust the contention window value.

It should be understood that the PSFCH carries HARQ information, indicating whether a corresponding PSSCH is successfully received. Therefore, the receiving terminal device of the PSSCH is a sending terminal device of the PSFCH, and the sending terminal device of the PSSCH is a receiving terminal device of the PSFCH.

As shown in FIG. 10, UE 1 expects to determine, based on a HARQ of a PSSCH in a reference duration, how to adjust a contention window value. In the reference duration determined by UE 1, the PSSCH sent by the UE 1 to UE 3 is a HARQ-ACK enabled PSSCH or an ACK/NACK HARQ-ACK enabled PSSCH. The following describes two possible cases in which UE 3 does not send the PSFCH to UE 1.

In case 1, a transmission-transmission conflict occurs on the PSFCH. Specifically, as shown in (a) in FIG. 10, UE 3 receives PSSCHs from UE 1 and UE 2, and UE 3 needs to send PSFCHs to UE 1 and UE 2 simultaneously. However, based on factors such as a capability of UE 3 to send PSFCHs simultaneously and power control, UE 3 may not be able to send two PSFCHs simultaneously, and has to discard some PSFCHs and does not send the PSFCHs. According to the descriptions in the 3GPP technical specification (technical specification, TS) 38.213, UE 3 discards some PSFCHs with lower priorities and does not send the PSFCHs. Assuming that a priority of a PSFCH sent by UE 3 to UE 1 is low, UE 3 does not send the PSFCH to UE 1. The foregoing case is referred to as that UE 3 does not send a PSFCH to UE 1 due to a transmission-transmission conflict.

It should be understood that, due to factors such as a limited capability of UE 1 to send PSFCHs simultaneously and power control, a quantity of PSFCHs that are finally determined by UE 1 to send simultaneously may be less than a quantity of PSFCHs that need to be sent simultaneously. For this part, refer to descriptions in 3GPP TS 38.213. Details are not described in this application.

In case 2, a transmission-reception conflict occurs on the PSFCH. Specifically, as shown in (b) in FIG. 10, UE 3 receives a PSSCH from UE 1, UE 3 sends the PSSCH to UE 2, and a resource for UE 3 to send a PSFCH to UE 1 and a resource for the UE 3 to receive a PSFCH from UE 2 are located in a same slot (that is, UE 3 needs to receive and send the PSFCHs simultaneously). Due to a limitation of half-duplex (half-duplex), it is usually difficult for a terminal device to perform receiving and sending simultaneously. In this case, according to descriptions in 3GPP TS 38.213, a terminal device receives or sends only a PSFCH with a high priority. Assuming that a priority of the PSFCH that UE 3 needs to send to UE 1 is low, UE 3 chooses to receive the PSFCH from UE 2 instead of sending the PSFCH to UE 1. The foregoing case is referred to as that UE 3 does not send a PSFCH to UE 1 due to a transmission-reception conflict.

Further, in some cases, when the sending terminal device of the PSSCH does not detect a HARQ due to a PSFCH transmission-reception conflict or transmission-transmission conflict, the sending terminal device may mistakenly consider that the HARQ fails to be detected due to a PSSCH receiving failure caused by a PSSCH collision. Consequently, the sending terminal device blindly increases the contention window value. Refer to the foregoing descriptions of type 1 LBT, when performing type 1 LBT, the terminal device determines a value of a counter N based on the contention window value. A larger contention window value determined by the terminal device may indicate a larger value of the counter N determined based on the contention window value. When the value of the counter N is larger, a duration of performing the type 1 LBT by the terminal device is longer, that is, the terminal device needs a longer duration to access a channel. Therefore, when the terminal device blindly increases the contention window value, a probability that a sending terminal device accesses a channel is reduced.

In view of this, an embodiment of this application further provides a contention window value determining method, to determine an appropriate contention window value.

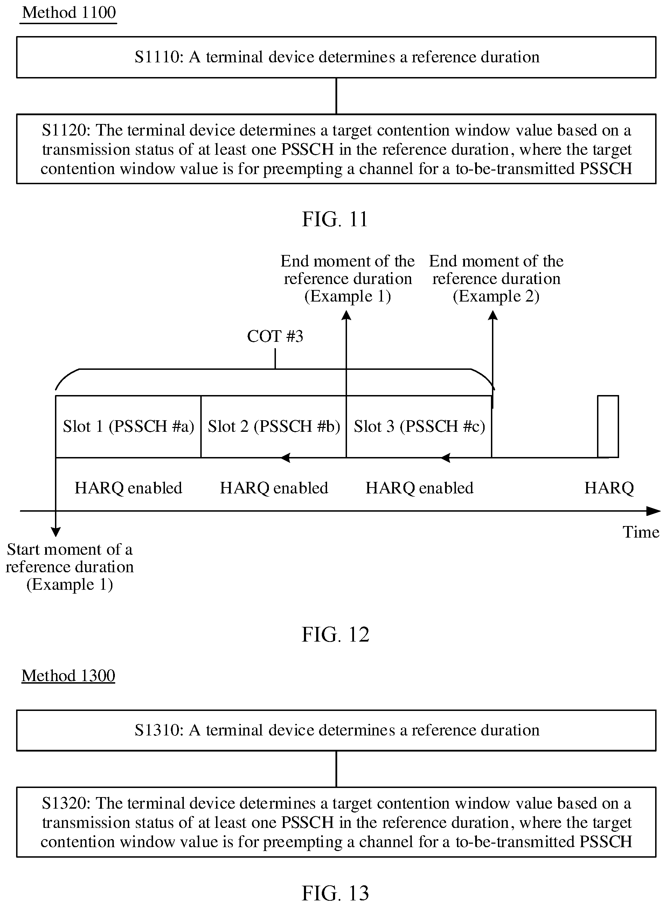

FIG. 11 is a schematic flowchart of a contention window value determining method 1100 according to an embodiment of this application. The method 1100 may include the following steps.

S1110: A terminal device determines a reference duration.

The terminal device is a terminal device that initializes a COT.

The reference duration is within a COT (denoted as COT #3 below, and the COT is a COT initialized by the terminal device), the reference duration includes a first PSSCH, the first PSSCH is a HARQ enabled (HARQ enabled) PSSCH, and a HARQ corresponding to the first PSSCH is detected by the terminal device. The reference duration including the first PSSCH means that the terminal device completes transmission of the first PSSCH in the reference duration.

For example, the HARQ enabled PSSCH includes one or more of the following PSSCHs: a HARQ enabled unicast PSSCH, a HARQ enabled multicast 1 PSSCH, or a HARQ enabled multicast 2 PSSCH. In other words, the HARQ enabled PSSCH is a HARQ-ACK enabled PSSCH.

For another example, the HARQ enabled PSSCH includes one or more of the following PSSCHs: a HARQ enabled unicast PSSCH, or a HARQ enabled multicast 2 PSSCH. In other words, the HARQ enabled PSSCH is an ACK/NACK HARQ-ACK enabled PSSCH.

The HARQ enabled unicast PSSCH is a PSSCH that meets the following condition: A cast type (cast type) of the PSSCH is unicast, and control information associated with the PSSCH (for example, the control information is second-order sidelink control information (sidelink control information, SCI), or referred to as SCI-2) includes HARQ enabling indication information.

The HARQ enabled multicast 1 PSSCH is a PSSCH that meets the following conditions: a cast type of the PSSCH is multicast 1, and control information (for example, the control information is second-order SCI, or referred to as SCI-2) associated with the PSSCH includes HARQ enabling indication information.

The HARQ enabled multicast 2 PSSCH is a PSSCH that meets the following conditions: a cast type of the PSSCH is multicast 2, and control information (for example, the control information is second-order SCI, or referred to as SCI-2) associated with the PSSCH includes HARQ enabling indication information.

When the control information (for example, the control information is second-order SCI, or is referred to as SCI-2) associated with the PSSCH includes the HARQ enabling indication information, the control information of the PSSCH indicates a receiving device of the PSSCH to feed back HARQ information of the PSSCH to the terminal device.

For the HARQ enabled PSSCH whose cast type is unicast, when correctly receiving the PSSCH, a receiving device of the PSSCH feeds back ACK information to the terminal device. When correctly receiving control information (for example, the control information is first-order SCI, or referred to as SCI-1) associated with the PSSCH, or when not correctly receiving the PSSCH, the receiving device of the PSSCH feeds back NACK information to the terminal device. Alternatively, when not correctly receiving control information (for example, the control information is first-order SCI, or is referred to as SCI-1) associated with the PSSCH, the receiving device of the PSSCH does not feed back the HARQ to the terminal device.

For the HARQ enabled PSSCH whose cast type is multicast 1, when correctly receiving control information (for example, the control information is first-order SCI, or referred to as SCI-1) associated with the PSSCH but not correctly receiving the PSSCH, the receiving device of the PSSCH feeds back NACK information to the terminal device; otherwise, the receiving device of the PSSCH does not feed back HARQ information.

A manner of feeding back HARQ information for the HARQ enabled PSSCH whose cast type is multicast 2 is the same as the manner of feeding back HARQ information for the HARQ enabled PSSCH whose cast type is unicast. Details are not described herein again.

The terminal device detecting the HARQ corresponding to the first PSSCH means that the terminal device may determine a reception status of the first PSSCH. To be specific, the terminal device may determine whether the first PSSCH is successfully received or not successfully received.

For example, the terminal device detecting a HARQ corresponding to the HARQ enabled unicast PSSCH means that the terminal device detects a PSFCH (denoted as PSFCH #1) corresponding to the HARQ enabled unicast PSSCH, where PSFCH #1 carries ACK information or NACK information. It may be understood that, after the terminal device receives PSFCH #1, if PSFCH #1 carries the ACK information, the terminal device may determine that the HARQ enabled unicast PSSCH is successfully received; or if PSFCH #1 carries the NACK information, the terminal device may determine that the HARQ enabled unicast PSSCH is not successfully received.

For example, the terminal device detecting a HARQ corresponding to the HARQ enabled multicast 1 PSSCH means that the terminal device detects a PSFCH (denoted as PSFCH #2) corresponding to the HARQ enabled multicast 1 PSSCH, and PSFCH #2 carries NACK information; or the terminal device detecting a HARQ corresponding to the HARQ enabled multicast 1 PSSCH means that the terminal device does not detect PSFCH #2. It may be understood that, if the terminal device detects PSFCH #2, the terminal device may determine that the HARQ enabled multicast 1 PSSCH is not successfully received; or if the terminal device does not detect PSFCH #2, the terminal device may determine that the HARQ enabled multicast 1 PSSCH is successfully received.

For example, the terminal device detecting a HARQ corresponding to the HARQ enabled multicast 2 PSSCH means that the terminal device detects a PSFCH (denoted as PSFCH #3) corresponding to the HARQ enabled multicast 2 PSSCH, and PSFCH #3 carries ACK information or NACK information. It may be understood that, after the terminal device receives PSFCH #3, if PSFCH #3 carries the ACK information, the terminal device may determine that the HARQ enabled multicast 2 PSSCH is successfully received; or if PSFCH #3 carries the NACK information, the terminal device may determine that the HARQ enabled multicast 2 PSSCH is not successfully received.

A time point at which the terminal device detects the HARQ corresponding to the first PSSCH is not limited in this embodiment of this application. The terminal device may detect, within COT #3, the HARQ corresponding to the first PSSCH, or the terminal device may detect, after COT #3, the HARQ corresponding to the first PSSCH, provided that the terminal device detects the HARQ corresponding to the first PSSCH before determining a target contention window value.

A start moment of the reference duration is not limited in this embodiment of this application. For example, the start moment of the reference duration is a start moment of COT #3.

FIG. 12 is a diagram of determining a start moment of a reference duration in COT #3. As shown in FIG. 12, COT #3 includes slot 1 to slot 3. Slot 1 is for transmitting PSSCH #a, slot 2 is for transmitting PSSCH #b, and slot 3 is for transmitting PSSCH #c. PSSCH #a to PSSCH #c are all HARQ enabled PSSCHs, and the terminal device detects HARQs corresponding to PSSCH #b and PSSCH #c. Therefore, PSSCH #b and PSSCH #c may be examples of the first PSSCH. If the start moment of the reference duration is the start moment of COT #3, the start moment of the reference duration is a start moment of slot 1.

In this embodiment of this application, the reference duration needs to include the first PSSCH. Specifically, an end moment of the reference duration is a transmission end moment of the first PSSCH. Alternatively, the end moment of the reference duration is a moment after the transmission end moment of the first PSSCH.

FIG. 12 is a diagram of determining an end moment of a reference duration in COT #3. As shown in FIG. 12, COT #3 includes slot 1 to slot 3. Refer to the foregoing descriptions of FIG. 12. PSSCH #a to PSSCH #c are all HARQ enabled PSSCHs, and the terminal device detects HARQs corresponding to PSSCH #b and PSSCH #c. Therefore, PSSCH #b and PSSCH #c may be examples of the first PSSCH. If the end moment of the reference duration is the transmission end moment of the first PSSCH, and the first PSSCH is PSSCH #b, the end moment of the reference duration is an end moment of slot 2. If the end moment of the reference duration is the transmission end moment of the first PSSCH, and the first PSSCH is PSSCH #c, the end moment of the reference duration is an end moment of slot 3. If the end moment of the reference duration is a transmission end moment of a PSSCH transmitted after the first PSSCH, and the first PSSCH is PSSCH #b, the end moment of the reference duration is an end moment of slot 3. If the end moment of the reference duration is a transmission end moment of a PSSCH after the first PSSCH, and the first PSSCH is PSSCH #c, because PSSCH #c is a last PSSCH in COT #3, the transmission end moment of the reference duration is a transmission end moment of PSSCH #c, that is, an end moment of slot 3.

It should be understood that, in a possible implementation, a PSSCH may occupy a plurality of consecutive time units. In this case, a transmission end moment of the PSSCH is an end moment of a last time unit occupied by the PSSCH. For example, if PSSCH #b in FIG. 12 occupies slot 2 and slot 3, a transmission end moment of PSSCH #b is an end moment of slot 3. The time unit mentioned in this embodiment of this application may be a slot, a symbol, a half slot, a slot group, or the like.

In a possible implementation, the end moment of the reference duration is the transmission end moment of the first PSSCH, and the first PSSCH is the 1^{st} HARQ enabled PSSCH whose corresponding HARQ is detected by the terminal device in COT #3.

As shown in FIG. 12, both PSSCH #b and PSSCH #c are HARQ enabled PSSCHs, and HARQs corresponding to PSSCH #b and PSSCH #c are detected by the terminal device. Because PSSCH #b is transmitted before PSSCH #c, that is, PSSCH #b is the 1^{st} HARQ enabled PSSCH whose corresponding HARQ is detected by the terminal device in COT #3, the first PSSCH is PSSCH #b, the end moment of the reference duration is a transmission end moment of PSSCH #b, that is, an end moment of slot 2.

The end moment of the reference duration is the transmission end moment of the first PSSCH, and the first PSSCH is the 1^{st} HARQ enabled PSSCH whose corresponding HARQ is detected by the terminal device in COT #3. In other words, the end moment of the reference duration is an end moment of the 1^{st} time unit that meets the following condition: The terminal device completes transmission of the first PSSCH. Alternatively, the end moment of the reference duration is an end moment of the 1^{st} time unit that meets the following condition: The terminal device completes transmission of at least one HARQ-ACK enabled PSSCH, and at least one PSSCH in the at least one HARQ-ACK enabled PSSCH is a PSSCH whose corresponding HARQ is detected by the terminal device. Alternatively, the end moment of the reference duration is an end moment of the 1^{st} time unit that meets the following condition: The terminal device completes transmission of at least one ACK/NACK HARQ-ACK enabled PSSCH, and at least one PSSCH in the at least one ACK/NACK HARQ-ACK enabled PSSCH is a PSSCH whose corresponding HARQ is detected by the terminal device.

COT #3 is not limited in this embodiment of this application. For example, COT #3 is a COT closest to a current to-be-transmitted PSSCH, or a priority of COT #3 is the same as a priority of the current to-be-transmitted PSSCH. For a manner in which the terminal device determines COT #3, refer to the descriptions in the method 200.

It should be noted that, if COT #3 does not include the first PSSCH, that is, all PSSCHs in COT #3 are PSSCHs whose HARQ is disabled, or if COT #3 includes a HARQ enabled PSSCH, but the terminal device does not detect a HARQ corresponding to the HARQ enabled PSSCH in COT #3, the end moment of the reference duration determined by the terminal device may be an end moment of COT #3, or the end moment of the reference duration may be a moment at which the terminal device determines the target contention window value.

S1120: The terminal device may determine the target contention window value based on a transmission status of at least one PSSCH in the reference duration.

For a manner in which the terminal device determines the target contention window value based on the transmission status of the at least one PSSCH in the reference duration, refer to the manner in which the terminal device determines the target contention window value based on the transmission status of the at least one TB in the reference duration in S220.

In this embodiment of this application, the reference duration determined by the terminal device includes the first PSSCH. Therefore, when the terminal device determines the target contention window value based on the transmission status of the at least one PSSCH in the reference duration, the terminal device may determine the target contention window value based on at least the HARQ of the first PSSCH, thereby avoiding the following problem: The terminal device does not have sufficient information to determine how to determine the target contention window value because the terminal device does not detect a HARQ corresponding to a PSSCH in the reference duration. In addition, the following problem can also be avoided: Because the terminal device mistakenly considers a PSFCH transmission-transmission conflict/transmission-reception conflict as a PSSCH collision when the terminal device does not detect a HARQ, a contention window value is blindly increased, further reducing a probability of accessing a channel by a sending terminal device.

FIG. 13 is a schematic flowchart of a contention window value determining method 1300 according to an embodiment of this application. The method 1300 may include the following steps.

S1310: A terminal device determines a reference duration.

The terminal device is a terminal device that initializes a COT.

The reference duration is within a COT (denoted as COT #3, where COT #3 is a COT initialized by the terminal device), and the reference duration includes at least one HARQ enabled PSSCH. For example, the terminal device may determine that a start moment of the reference duration is a start moment of COT #3. An end moment of the reference duration is not limited in this embodiment of this application. For example, the terminal device may determine that the end moment of the reference duration is an end moment of the 1^{st} time unit that meets the following condition: The terminal device completes transmission of the at least one HARQ enabled PSSCH.

For descriptions of the HARQ enabled PSSCH, refer to the descriptions in S1110 in the method 1100.

S1320: The terminal device may determine a target contention window value based on a transmission status of at least one PSSCH in the reference duration.

When the terminal device does not detect HARQs corresponding to all HARQ enabled PSSCHs in the reference duration, the terminal device remains a contention window value unchanged, or the terminal device determines the target contention window value based on a proportion of a retransmitted PSSCH in the to-be-transmitted PSSCH.

The terminal device not detecting a HARQ corresponding to the HARQ enabled PSSCH means that the terminal device cannot determine a reception status of the HARQ enabled PSSCH. It should be understood that, during a collision of a PSSCH, control information (for example, the control information is first-order SCI, or is referred to as SCI-1) associated with the PSSCH also collides. Consequently, the control information cannot be successfully received, and a receiving device of the PSSCH does not send a HARQ, and the terminal device cannot detect the HARQ. Alternatively, when a transmission-reception conflict/transmission-transmission conflict of a PSFCH occurs, a receiving device of the PSSCH does not send a HARQ, and the terminal device may not detect a HARQ corresponding to a HARQ enabled PSSCH. In this case, the terminal device cannot determine whether a PSSCH collision occurs, or whether a PSSCH is successfully received but a PSFCH transmission-reception conflict/transmission-transmission conflict occurs.

For example, the terminal device not detecting a HARQ corresponding to the HARQ enabled unicast PSSCH means that the terminal device does not detect a PSFCH corresponding to the HARQ enabled unicast PSSCH.

For example, the terminal device not detecting a HARQ corresponding to the HARQ enabled multicast 2 PSSCH means that the terminal device does not detect a PSFCH corresponding to the HARQ enabled multicast 2 PSSCH.

That the terminal device does not detect the HARQ corresponding to the HARQ enabled PSSCH includes the following several cases: The terminal device does not detect the HARQ corresponding to the HARQ enabled PSSCH in a time unit in which the terminal device is expected to detect the HARQ corresponding to the HARQ enabled PSSCH; or the terminal device does not detect the HARQ corresponding to the HARQ enabled PSSCH until a moment at which the target contention window value is determined.

That the terminal device remains the contention window value unchanged may include the following two cases: The terminal device remains the contention window value unchanged based on a contention window value of a COT that is initialized by the terminal device and that is closest to a current to-be-transmitted PSSCH; or the terminal device remains the contention window value unchanged based on a contention window value of COT #3. In other words, when the terminal device remains the contention window value unchanged, the terminal device may determine, as the target contention window value, the contention window value of the COT that is initialized by the terminal device and that is closest to the current to-be-transmitted PSSCH, or the terminal device may determine, as the target contention window value, the contention window value of COT #3. That the terminal device remains the contention window value unchanged may be understood as that the terminal device does not adjust the contention window value, or the terminal device does not perform an action of adjusting the contention window value. It should be understood that COT #3 may not be the COT that initializes the terminal device and that is closest to the current to-be-transmitted PSSCH. COT #3 is not limited in this embodiment.

Refer to the foregoing descriptions of type 1 LBT, before the terminal device initializes the COT, the terminal device needs to generate a counter N based on the contention window value, so that the terminal device performs a counter rollback process on type 1 LBT based on the counter N. The contention window value of the COT initialized by the terminal device may be understood as a contention window value used by the terminal device to perform type 1 LBT for initializing the COT.

A manner in which the terminal device determines the target contention window value based on the proportion of the retransmitted PSSCH in the to-be-transmitted PSSCH is not limited in this embodiment of this application. For example, if the proportion of the retransmitted PSSCH in the to-be-transmitted PSSCH exceeds threshold #1, the terminal device may determine the target contention window value as a value that is in a target value range and that is greater than the contention window value of COT #3. If the proportion of the retransmitted PSSCH in the to-be-transmitted PSSCH is less than threshold #1, the terminal device may determine the target contention window value as a smallest value in the target value range, or remain the contention window value unchanged. The target value range is a value range of a contention window value corresponding to a channel access priority class (CAPC) corresponding to the to-be-transmitted PSSCH. For example, if the CAPC corresponding to the to-be-transmitted PSSCH is 2, the target value range is {7, 15} according to Table 1.

In this embodiment of this application, if the terminal device does not detect the HARQs corresponding to all the HARQ enabled PSSCHs in the reference duration, the terminal device no longer blindly increases the contention window value, but remains the contention window value unchanged, or determines the target contention window value based on a proportion of a retransmitted PSSCH in the to-be-transmitted PSSCH. This can avoid a problem that because the terminal device blindly increases the contention window value, a probability that the terminal device accesses a channel is decreased.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by a communication device may alternatively be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

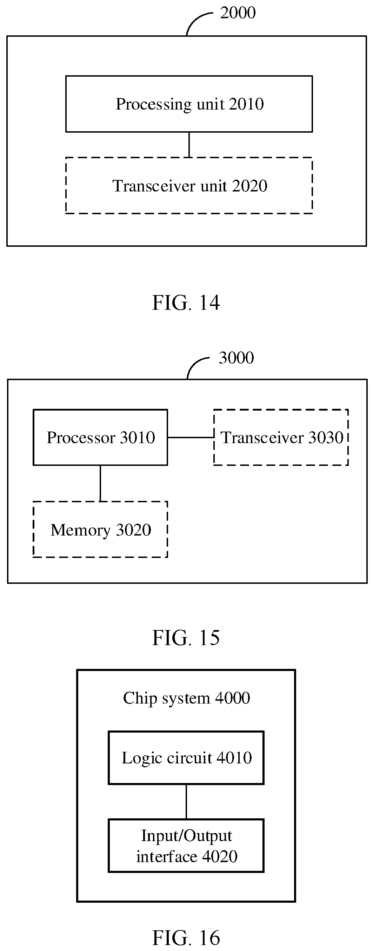

FIG. 14 is a block diagram of a communication apparatus 2000 according to an embodiment of this application. The apparatus 2000 includes a processing unit 2010, and the processing unit 2010 may be configured to perform data processing.

Optionally, the apparatus 2000 further includes a transceiver unit 2020. The transceiver unit 2020 may be configured to implement a corresponding communication function. The transceiver unit 2020 may also be referred to as a communication interface or a communication unit.

Optionally, the apparatus 2000 further includes a storage unit. The storage unit may be configured to store instructions and/or data. The processing unit 2010 may read the instructions and/or the data in the storage unit, so that the apparatus implements actions of the terminal device in the foregoing method embodiments.

In a design, the apparatus 2000 may be the terminal device in the foregoing embodiments, or may be a component (for example, a chip) of the terminal device. The apparatus 2000 may implement steps or procedures performed by the terminal device in the foregoing method embodiments. The processing unit 2010 may be configured to perform processing-related operations of the terminal device in the foregoing method embodiments.

In a possible implementation, the processing unit 2010 is configured to determine a reference duration, where a priority of a COT to which the reference duration belongs is the same as a transmission priority corresponding to a to-be-transmitted TB. The processing unit 2010 is further configured to determine a target contention window value based on a transmission status of the at least one TB in the reference duration, where the target contention window value is for preempting a channel for the to-be-transmitted TB. A cast type of a TB in the COT to which the reference duration belongs is different from a cast type of the to-be-transmitted TB; a TB in the COT to which the reference duration belongs corresponds to at least two cast types; or the to-be-transmitted TB corresponds to at least two cast types.

In another possible implementation, the processing unit 2010 is configured to determine a reference duration corresponding to each of at least one cast type, where the at least one cast type is a cast type of at least one TB in a to-be-transmitted TB, a priority of a COT to which the reference duration belongs is the same as a transmission priority corresponding to the to-be-transmitted TB, and a cast type of a TB in the reference duration is the same as a cast type corresponding to the reference duration. The processing unit 2010 is further configured to determine a target contention window value based on a transmission status of a TB in the reference duration corresponding to each cast type, where the target contention window value is for preempting a channel for the to-be-transmitted TB. A TB in the COT to which the reference duration belongs corresponds to at least two cast types, or the to-be-transmitted TB corresponds to at least two cast types.

In still another possible implementation, the processing unit 2010 is configured to determine a target contention window value based on a transmission status of the at least one PSSCH in the reference duration, where the target contention window value is for preempting a channel for the to-be-transmitted PSSCH. The reference duration is within a COT, the reference duration includes a first PSSCH, the first PSSCH is a HARQ enabled PSSCH, and a HARQ corresponding to the first PSSCH is detected by the terminal device; and the terminal device is a terminal device that initializes the COT.

In still another possible implementation, the processing unit 2010 is configured to determine a target contention window value based on a transmission status of the at least one PSSCH in the reference duration, where the target contention window value is for preempting a channel for the to-be-transmitted PSSCH. The reference duration is within a COT, the reference duration includes at least one HARQ enabled PSSCH; and when the terminal device does not detect HARQs corresponding to all HARQ enabled PSSCHs in the reference duration, the terminal device remains a contention window value unchanged, or the terminal device determines the target contention window value based on a proportion of a retransmitted PSSCH in the to-be-transmitted PSSCH.

The apparatus 2000 may implement corresponding steps or procedures performed by the terminal device in the method embodiments according to embodiments of this application. The apparatus 2000 may include units configured to perform the method performed by the terminal device in the embodiment shown in FIG. 2, FIG. 8, FIG. 11, or FIG. 13.

For more detailed descriptions of the apparatus 2000, refer to related descriptions in the foregoing method embodiments. Details are not described herein again.

It should be understood that specific processes of performing the foregoing corresponding steps by the units are described in detail in the foregoing method embodiments. For brevity, details are not described herein again.

It should be understood that the apparatus 2000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 2000 may be specifically the terminal device in the foregoing embodiments, and may be configured to perform the procedures and/or the steps corresponding to the terminal device in the foregoing method embodiments. To avoid repetition, details are not described herein again.

The apparatus 2000 in the foregoing solutions has functions of implementing corresponding steps performed by the terminal device in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 2020 may alternatively be a transceiver circuit (for example, the transceiver circuit may include a receiver circuit and a transmitter circuit), and the processing unit may be a processing circuit.

It should be noted that the apparatus in FIG. 14 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 15 is a block diagram of a communication apparatus 3000 according to an embodiment of this application. The apparatus 3000 includes a processor 3010, and the processor 3010 is coupled to a memory 3020. Optionally, the apparatus further includes the memory 3020, configured to store a computer program or instructions and/or data. The processor 3010 is configured to execute the computer program or the instructions stored in the memory 3020, or read the data stored in the memory 3020, to perform the methods in the foregoing method embodiments.

Optionally, there are one or more processors 3010.

Optionally, there are one or more memories 3020.

Optionally, the memory 3020 and the processor 3010 are integrated together or disposed separately.

Optionally, as shown in FIG. 15, the apparatus 3000 further includes a transceiver 3030. The transceiver 3030 is configured to receive and/or send a signal. For example, the processor 3010 is configured to control the transceiver 3030 to receive and/or send a signal.

In a solution, the apparatus 3000 is configured to implement operations performed by the terminal device in the foregoing method embodiments.

For example, the processor 3010 is configured to execute the computer program or the instructions stored in the memory 3020, to implement related operations of the terminal device in the foregoing method embodiments.

In an implementation process, steps in the foregoing methods can be implemented by using a hardware integrated logic circuit in the processor 3010, or by using instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 3020, and the processor 3010 reads information in the memory 3020 and completes the steps in the foregoing methods in combination with hardware of the processor 3010. To avoid repetition, details are not described herein again.

It should be understood that, in embodiments of this application, the processor may be one or more integrated circuits, and is configured to execute a related program, to perform the method embodiments of this application.

A processor (for example, the processor 3010) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application specific integrated circuit, ASIC), a field programmable gate array (field programmable gate array, FPGA), a programmable logic device (programmable logic device, PLD), gating logic, transistor logic, a discrete hardware circuit, a processing circuit, or another proper combination of hardware and firmware and/or hardware and software, and is configured to perform various functions described in this disclosure. The processor may be a general-purpose processor or a dedicated processor. For example, the processor 3010 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 3020) may store data required by the processor (for example, the processor 3010) during software execution. The memory may be implemented by using any suitable storage technology. For example, the memory may be any available storage medium that can be accessed by a processor and/or a computer. Non-limiting examples of the storage medium include: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM), a removable medium, an optical disc memory, a magnetic disk storage medium, a magnetic storage device, a flash memory, a register, a state memory, a remote mounted memory, a local or remote storage component, or any other medium capable of carrying or storing software, data, or information and accessible by a processor/computer. It should be noted that the memory described in this specification aims to include but is not limited to these memories and any memory of another appropriate type.

The memory (for example, the memory 3020) and the processor (for example, the processor 3010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (where for example, the integrated circuit may be disposed in a terminal device or another network node).

FIG. 16 is a block diagram of a chip system 4000 according to an embodiment of this application. The chip system 4000 (or may be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement the methods and functions in embodiments of this application. The input/output interface 4020 may be an input/output circuit in the chip system 4000, and outputs information processed by the chip system 4000, or inputs to-be-processed data or signaling information to the chip system 4000 for processing.

In a solution, the chip system 4000 is configured to implement operations performed by the terminal device in the foregoing method embodiments.

For example, the logic circuit 4010 is configured to implement processing related operations performed by the terminal device in the foregoing method embodiments, for example, a processing related operation performed by the terminal device in the embodiment shown in FIG. 2, FIG. 8, FIG. 11, or FIG. 13. The input/output interface 4020 is configured to implement sending and/or receiving related operations performed by the terminal device in the foregoing method embodiments, for example, a sending and/or receiving related operation performed by the terminal device in the embodiment shown in FIG. 2 or FIG. 8.

An embodiment of this application further provides a computer-readable storage medium. The computer-readable storage medium stores computer instructions for implementing the method performed by the terminal device in the foregoing method embodiments.

An embodiment of this application further provides a computer program product, including instructions. When the instructions are executed by a computer, the method performed by the terminal device in the foregoing method embodiments is implemented.

An embodiment of this application further provides a communication system. The communication system includes at least one terminal device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A contention window value determining method, comprising:
determining, by a terminal device, a reference duration, wherein a priority of a channel occupancy time COT to which the reference duration belongs is the same as a transmission priority corresponding to a to-be-transmitted transport block TB; and
determining, by the terminal device, a target contention window value based on a transmission status of at least one TB in the reference duration, wherein the target contention window value is for preempting a channel for the to-be-transmitted TB,wherein
a cast type of a TB in the COT to which the reference duration belongs is different from a cast type of the to-be-transmitted TB;
a TB in the COT to which the reference duration belongs corresponds to at least two cast types; or
the to-be-transmitted TB corresponds to at least two cast types.

2. The method according to claim 1, wherein a cast type of the at least one TB in the COT to which the reference duration belongs or in the reference duration is the same as a cast type of at least one TB in the to-be-transmitted TB.

3. The method according to claim 1 or 2, wherein
the reference duration comprises at least one transmitted TB; or
the COT to which the reference duration belongs is a COT closest to a current moment.

4. The method according to any one of claims 1 to 3, wherein a start moment of the reference duration is any one of the following:
a start moment of the COT to which the reference duration belongs;
a transmission start moment of a transmitted TB in the COT to which the reference duration belongs;
a transmission start moment of a TB corresponding to a lowest transmission priority in the TB in the COT to which the reference duration belongs;
a transmission start moment of a first TB in the COT to which the reference duration belongs, wherein a cast type of the first TB is the same as the cast type of the at least one TB in the to-be-transmitted TB; or
a transmission start moment of a TB that is in a TB corresponding to feedback information received by the terminal device and that is first transmitted in the COT to which the reference duration belongs.

5. The method according to any one of claims 1 to 4, wherein an end moment of the reference duration is any one of the following:
an end moment of the COT to which the reference duration belongs;
a transmission end moment of the transmitted TB in the COT to which the reference duration belongs;
a transmission end moment of the TB corresponding to the lowest transmission priority in the TB in the COT to which the reference duration belongs;
a transmission end moment of the first TB in the COT to which the reference duration belongs, wherein the cast type of the first TB is the same as the cast type of the at least one TB in the to-be-transmitted TB;
a transmission end moment of a TB that is in the TB corresponding to the feedback information received by the terminal device and that is last transmitted in the COT to which the reference duration belongs; or
an end moment of the 1^{st} transmission slot of the TB that is in the TB corresponding to the feedback information received by the terminal device and that is first transmitted in the COT to which the reference duration belongs.

6. The method according to any one of claims 1 to 5, wherein before the determining, by a terminal device, a reference duration, the method further comprises:
determining, by the terminal device, that a cast type of a TB in a transmitted COT after a last updated contention window value is different from the cast type of the to-be-transmitted TB, or that the TB in the transmitted COT corresponds to at least two cast types;
determining, by the terminal device, that the to-be-transmitted TB corresponds to at least two cast types; or
determining, by the terminal device, that after the last updated contention window value, there is no transmitted TB whose cast type is the same as that of the to-be-transmitted TB.

7. The method according to any one of claims 3 to 6, wherein the reference duration comprises one transmitted TB, comprising the following several cases:
the reference duration comprises an initial transmission and all retransmissions of the TB;
the reference duration comprises a last retransmission of the TB;
the reference duration comprises an initial transmission of the TB, and feedback information of the initial transmission of the TB is an acknowledgment ACK; or
the reference duration comprises a retransmission of the TB, and feedback information of the retransmission of the TB is an ACK.

8. The method according to any one of claims 1 to 7, wherein the determining, by the terminal device, a target contention window value based on a transmission status of at least one TB in the reference duration comprises:
determining, by the terminal device, the target contention window value based on a transmission status of a second TB in the reference duration, wherein the second TB meets one or more of the following conditions:
both an initial transmission and a retransmission of the second TB are completed, and feedback information of a last retransmission of the second TB is a negative acknowledgment NACK;
feedback information of an initial transmission or a retransmission of the second TB is an ACK;
according to a predefined cast type order, a cast type of the second TB is ranked before a cast type of a remaining TB in the reference duration;
a cast type of the second TB is the same as the cast type of the at least one TB in the to-be-transmitted TB;
the second TB is a TB that is in the TB corresponding to the feedback information received by the terminal device and that is last transmitted in the reference duration;
a transmission priority corresponding to the second TB is the same as the transmission priority corresponding to the to-be-transmitted TB;
a contention window value determined based on the transmission status of the second TB is greater than a contention window value determined based on a transmission status of a remaining TB in the reference duration;
a contention window value determined based on the transmission status of the second TB is less than a contention window value determined based on a transmission status of a remaining TB in the reference duration;
a transmission priority corresponding to the second TB is higher than a transmission priority corresponding to a remaining TB in the reference duration; or
the second TB is a TB, in the TB in the reference duration, for which the terminal device receives feedback information corresponding to the TB.

9. The method according to claim 8, wherein the predefined cast type order is as follows: an order of different cast types from front to back is: multicast 2, multicast 1, unicast, and hybrid automatic repeat request disabled.

10. The method according to claim 8 or 9, wherein if the TB in the reference duration comprises M second TBs, wherein M is an integer greater than 1, the determining, by the terminal device, the target contention window value based on a transmission status of a second TB in the reference duration comprises:
determining, by the terminal device, N candidate contention window values based on transmission statuses of the M second TBs, wherein N is a positive integer, and N≤M; and
determining, by the terminal device, the target contention window value based on the N candidate contention window values, wherein
the target contention window value is a smallest value in the N candidate contention window values;
the target contention window value is a largest value in the N candidate contention window values;
the target contention window value is a candidate contention window value that is in the N candidate contention window values and greater than an average value of the N candidate contention window values and that has a smallest difference from the average value; or
the target contention window value is a candidate contention window value in the N candidate contention window values, wherein an absolute value of a difference between the candidate contention window value and an average value of the N candidate contention window values is the smallest.

11. The method according to claim 8 or 9, wherein if the TB in the reference duration comprises M second TBs, wherein M is a positive integer greater than 1, the determining, by the terminal device, the target contention window value based on a transmission status of a second TB in the reference duration comprises:
collecting, by the terminal device, statistics about feedback information of the M second TBs; and
determining, by the terminal device, the target contention window value based on the feedback information of the M second TBs.

12. The method according to claim 8 or 9, wherein if the TB in the reference duration comprises M second TBs, wherein M is a positive integer greater than 1, the determining, by the terminal device, the target contention window value based on a transmission status of a second TB in the reference duration comprises:
determining, by the terminal device, the target contention window value based on a transmission status of one of the M second TBs; or
sequentially updating, by the terminal device, a contention window value based on transmission statuses of the M second TBs according to a transmission sequence of the M second TBs or a sequence of receiving feedback information of the M second TBs, until the target contention window value is determined.

13. The method according to any one of claims 1 to 7, wherein the determining, by the terminal device, a target contention window value based on a transmission status of at least one TB in the reference duration comprises:
determining, by the terminal device, at least one candidate contention window value based on the transmission status of the at least one TB; and
determining, by the terminal device, the target contention window value based on the at least one candidate contention window value, wherein
the target contention window value is a smallest value in the at least one candidate contention window value;
the target contention window value is a largest value in the at least one candidate contention window value;
the target contention window value is a candidate contention window value that is in the at least one candidate contention window value and greater than an average value of the at least one candidate contention window value and that has a smallest difference from the average value; or
the target contention window value is a candidate contention window value in the at least one candidate contention window value, wherein an absolute value of a difference between the candidate contention window value and an average value of the at least one candidate contention window value is the smallest.

14. The method according to any one of claims 1 to 7, wherein the determining, by the terminal device, a target contention window value based on a transmission status of at least one TB in the reference duration comprises:
collecting, by the terminal device, statistics about feedback information of the at least one TB; and
determining, by the terminal device, the target contention window value based on the feedback information of the at least one TB.

15. The method according to claim 11 or 14, wherein the statistics about the feedback information are collected in the following manner:
if a cast type of a TB is unicast, collecting statistics about feedback information of an initial transmission and feedback information of each retransmission of the TB, collecting statistics about ACK feedback information of the TB, or collecting statistics about feedback information of a last retransmission of the TB;
if a cast type of a TB is multicast 1 and feedback information of the TB is a NACK, denoting a quantity of pieces of feedback information of the TB as 1;
if a cast type of a TB is multicast 1 and feedback information of the TB is not a NACK, denoting the feedback information of the TB as an ACK, and denoting a quantity of pieces of feedback information of the TB as 1, denoting a quantity of pieces of feedback information of the TB as L, or denoting a quantity of pieces of feedback information of the TB as L-1, wherein L is a quantity of terminal devices comprised in a terminal device group configured to receive the TB; or
if a cast type of a TB is multicast 2, collecting statistics about each piece of feedback information of the TB.

16. The method according to claim 3, wherein if the reference duration comprises the at least one transmitted TB, and the at least one transmitted TB is a TB that is latest transmitted after a last updated contention window value, the determining, by the terminal device, a target contention window value based on a transmission status of at least one TB in the reference duration comprises:
determining, by the terminal device, the target contention window value based on a transmission status of the latest transmitted TB.

17. The method according to claim 16, wherein the determining, by the terminal device, the target contention window value based on a transmission status of the latest transmitted TB comprises:
if a cast type of the latest transmitted TB is hybrid automatic repeat request HARQ enabled, determining, by the terminal device, the target contention window value based on feedback information of the latest transmitted TB; or
if a cast type of the latest transmitted TB is HARQ disabled, determining, by the terminal device, the target contention window value based on a quantity of blind transmissions or a blind transmission proportion of the latest transmitted TB.

18. The method according to claim 3, wherein if the COT to which the reference duration belongs is the COT closest to the current moment, the determining, by the terminal device, a target contention window value based on a transmission status of at least one TB in the reference duration comprises:
determining, by the terminal device, the target contention window value based on a transmission status of a latest transmitted TB in the reference duration.

19. The method according to claim 18, wherein the determining, by the terminal device, the target contention window value based on a transmission status of a latest transmitted TB in the reference duration comprises:
if the terminal device does not receive feedback information of the latest transmitted TB, determining, by the terminal device, that the target contention window value remains unchanged; or
if the terminal device receives feedback information of the latest transmitted TB, determining, by the terminal device, the target contention window value based on the feedback information of the latest transmitted TB.

20. A contention window value determining method, comprising:
determining, by a terminal device, a target contention window value based on a transmission status of at least one physical sidelink shared channel PSSCH in a reference duration, wherein the target contention window value is for preempting a channel for a to-be-transmitted PSSCH;
the reference duration is within a channel occupancy time COT, the reference duration comprises a first PSSCH, the first PSSCH is a hybrid automatic repeat request HARQ enabled PSSCH, and a HARQ corresponding to the first PSSCH is detected by the terminal device; and
the terminal device is a terminal device that initializes the COT.

21. The method according to claim 20, wherein the HARQ enabled PSSCH comprises one or more of the following PSSCHs: a HARQ enabled unicast PSSCH, a HARQ enabled multicast 1 PSSCH, or a HARQ enabled multicast 2 PSSCH.

22. The method according to claim 20, wherein the HARQ enabled PSSCH comprises one or more of the following PSSCHs: a HARQ enabled unicast PSSCH, or a HARQ enabled multicast 2 PSSCH.

23. The method according to any one of claims 20 to 22, wherein a start moment of the reference duration is a start moment of the COT.

24. The method according to any one of claims 20 to 23, wherein an end moment of the reference duration is an end moment of a time unit in which the first PSSCH is located, and the first PSSCH is the 1^{st} HARQ enabled PSSCH whose corresponding HARQ is detected by the terminal device in the COT.

25. A contention window value determining method, comprising:
determining, by a terminal device, a target contention window value based on a transmission status of at least one physical sidelink shared channel PSSCH in a reference duration, wherein the target contention window value is for preempting a channel for a to-be-transmitted PSSCH; and
the reference duration is within a channel occupancy time COT, and the reference duration comprises at least one hybrid automatic repeat request HARQ enabled PSSCH; and
when the terminal device does not detect HARQs corresponding to all HARQ enabled PSSCHs in the reference duration, remaining, by the terminal device, a contention window value unchanged, or determining, by the terminal device, the target contention window value based on a proportion of a retransmitted PSSCH in the to-be-transmitted PSSCH.

26. The method according to claim 25, wherein the HARQ enabled PSSCH comprises one or more of the following PSSCHs: a HARQ enabled unicast PSSCH, a HARQ enabled multicast 1 PSSCH, or a HARQ enabled multicast 2 PSSCH.

27. The method according to claim 25, wherein the HARQ enabled PSSCH comprises one or more of the following PSSCHs: a HARQ enabled unicast PSSCH, or a HARQ enabled multicast 2 PSSCH.

28. A communication apparatus, comprising a module or a unit configured to perform the method according to any one of claims 1 to 27.

29. A communication apparatus, comprising a processor, wherein the processor is configured to execute a computer program or instructions stored in a memory, to enable the apparatus to perform the method according to any one of claims 1 to 27.

30. The apparatus according to claim 29, wherein the apparatus further comprises the memory and/or a communication interface, and the communication interface is coupled to the processor; and
the communication interface is configured to: input and/or output information.

31. A computer-readable storage medium, wherein the computer-readable storage medium stores a computer program or instructions; and when the computer program is run or the instructions are run on a communication apparatus, the communication apparatus is enabled to perform the method according to any one of claims 1 to 27.

32. A computer program product, wherein the computer program product comprises a computer program or instructions for performing the method according to any one of claims 1 to 27.

33. A chip, wherein the chip is coupled to a memory, and is configured to read and execute program instructions stored in the memory, to implement the method according to any one of claims 1 to 27.
